(19) Europäisches Patentamt
European Patent Office
Office européen des brevets

(11) **EP 4 538 145 A1**

(12) **EUROPEAN PATENT APPLICATION**
published in accordance with Art. 153(4) EPC

(43) Date of publication:
16.04.2025 Bulletin 2025/16

(51) International Patent Classification (IPC):
*B61L 25/02* (2006.01)    *B60L 3/00* (2019.01)
*B61D 37/00* (2006.01)    *B61K 13/04* (2006.01)
*G01M 17/08* (2006.01)

(21) Application number: 23819791.7

(22) Date of filing: 05.06.2023

(52) Cooperative Patent Classification (CPC):
B60L 3/00; B61D 37/00; B61K 13/04; B61L 25/02;
G01M 17/08

(86) International application number:
PCT/JP2023/020747

(87) International publication number:
WO 2023/238811 (14.12.2023 Gazette 2023/50)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 08.06.2022 JP 2022092733

(71) Applicant: Hitachi, Ltd.
Tokyo 100-8280 (JP)

(72) Inventors:
• MATSUO, Kazuki
Tokyo 100-8280 (JP)
• MAKI, Kentaroh
Tokyo 100-8280 (JP)
• MIYAUCHI, Tsutomu
Tokyo 100-8280 (JP)
• SATA, Mitsuyo
Tokyo 100-8280 (JP)
• MURANO, Motohiro
Tokyo 100-8280 (JP)
• SUZUKI, Takayuki
Tokyo 100-8280 (JP)

(74) Representative: MERH-IP Matias Erny Reichl
Hoffmann
Patentanwälte PartG mbB
Paul-Heyse-Straße 29
80336 München (DE)

(54) **SYSTEM AND METHOD FOR IN-TRAIN ABNORMALITY DETECTION**

(57) The present invention comprises: a plurality of measurement means for measuring the movement of passengers in each car of a train including a plurality of connected cars; and an abnormality detection means for comparing a measurement value of each of the plurality of measurement means with an abnormality determination value, and detects that an abnormality has occurred in the train, when the measurement value of at least one of the plurality of measurement means exceeds a range of the abnormality determination value.

FIG. 1

## Description

Technical Field

The present invention relates to a system and a method for in-train abnormality detection to detect abnormalities in a train.

Background Art

To ensure the reliability of railways, it is important not only to provide quality under normal circumstances but also to respond quickly to any abnormalities that occur during operation. Generally, the crew is responsible for an initial response to any abnormalities occurring on the train. Still, the crew often stays in driver's cabs at the front and rear of the train to monitor the front and rear while the train runs.

Therefore, it is difficult for the crew to visually detect abnormalities in an intermediate car of a set car (train) composed of a plurality of concatenated cars.

A solution is to introduce systems that give notice of an abnormality occurrence according to the type of abnormality. For example, regarding car facility abnormalities, there is a system that detects wheel derailment by using the internal pressure values of an air spring (patent literature 1) and a system that detects car overloads by using the internal pressure values of an air spring (patent literature 2). Regarding passenger abnormalities, there is a system that can monitor passengers and grasp abnormalities by delivering images from a surveillance camera installed in the passenger room and the results of analyzing a suspicious person to an operation manager (patent literature 3).

Citation List

Patent Literature

Patent Literature 1: Japanese Unexamined Patent Application Publication No. 2013-241134
Patent Literature 2: Japanese Unexamined Patent Application Publication No. 2006-218933
Patent Literature 3: Japanese Unexamined Patent Application Publication No. 2021-141389

Summary of Invention

Technical Problem

However, new equipment such as a surveillance camera needs to be installed on an existing train where no surveillance camera is installed and passengers need to be monitored based on image information including the surveillance camera footage. The transmission and reception of image information including surveillance camera footage requires a network that ensures the communication capacity to transmit large amounts of image information. For this reason, the method of detecting abnormalities in trains using surveillance cameras increases the costs of introducing the equipment.

It is an object of the present invention is to measure the movement of passengers in a train without using footage information and detect abnormalities in the train based on the measurement results.

Solution to Problem

To solve the above-mentioned issue, the present invention includes a plurality of measurement means to measure passenger movement in each car of a train including a plurality of connected cars; and abnormality detection means to compare each measurement value of the plurality of measurement means with an abnormality determination value and detect an abnormality occurrence in the train when a measurement value of at least one of the plurality of the measurement means exceeds a range of the abnormality determination values.

Advantageous Effects of Invention

The present invention can measure the movement of passengers in a train and detect an abnormality in the train based on the measurement results without using footage-based information.

Objects, configurations, and effects other than the above will be apparent from the description of the following embodiments.

Brief Description of Drawings

FIG. 1 is a diagram illustrating the configuration of an in-train abnormality detection system according to a first embodiment of the present invention.
FIG. 2 is a flowchart illustrating processing of an abnormality detection logic according to the first embodiment of the present invention.
FIG. 3 is a characteristic diagram illustrating an air spring internal pressure and air spring internal pressure value time subtraction of each car in the in-train abnormality detection system according to the first embodiment of the present invention.
FIG. 4 is a characteristic diagram illustrating a normal distribution applied to the in-train abnormality detection system according to the first embodiment of the present invention.
FIG. 5 is a diagram illustrating the configuration of an in-train abnormality detection system according to a second embodiment of the present invention.
FIG. 6 is a flowchart illustrating processing of an abnormality detection logic according to the second embodiment of the present invention.
FIG. 7 is a characteristic diagram illustrating an air spring internal pressure and air spring internal pressure value time subtraction of each car and set car in the in-train abnormality detection system according to the second embodiment of the present invention.
FIG. 8 is a diagram illustrating the configuration of an in-train abnormality detection system according to a third embodiment of the present invention.
FIG. 9 is a flowchart illustrating processing of an abnormality detection logic according to the third embodiment of the present invention.
FIG. 10 is a characteristic diagram illustrating an air spring internal pressure and air spring internal pressure change time subtraction of each car in the in-train abnormality detection system according to the third embodiment of the present invention.
FIG. 11 is a diagram illustrating the configuration of an in-train abnormality detection system according to a fourth embodiment of the present invention.
FIG. 12 is a flowchart illustrating processing of an abnormality detection logic according to the fourth embodiment of the present invention.
FIG. 13 is a characteristic diagram illustrating an air spring internal pressure and air spring internal pressure decrease time subtraction of each car and set car in the in-train abnormality detection system according to the fourth embodiment of the present invention.

Description of Embodiments

The description below explains the first through fourth embodiments by reference to the drawings. The symbols used in the first embodiment are synonymous with those used in the description of the other embodiments.

First Embodiment

The first embodiment is an abnormality detection method for responding to an abnormality occurrence when a passenger is confined to a train while the train stops. The fluctuation in the air spring internal pressure values between cars is used to detect the evacuation activity of passengers moving between cars. The present embodiment describes an air spring internal pressure value measurement device to measure air spring internal pressures as a representative example of measurement means to measure passenger movement. Other measurement means capable of identifying the number of passengers and the boarding rate may include a PCS (Passenger Count System) including an infrared sensor or a thermal sensor, a tire pressure measurement device, a vehicle suspension system, a concentration measurement device to measure oxygen concentration or carbon dioxide concentration, a mat using a piezoelectric element, and an optical sensor as measurement means. In that case, it may be favorable to detect the directions of passenger movement.

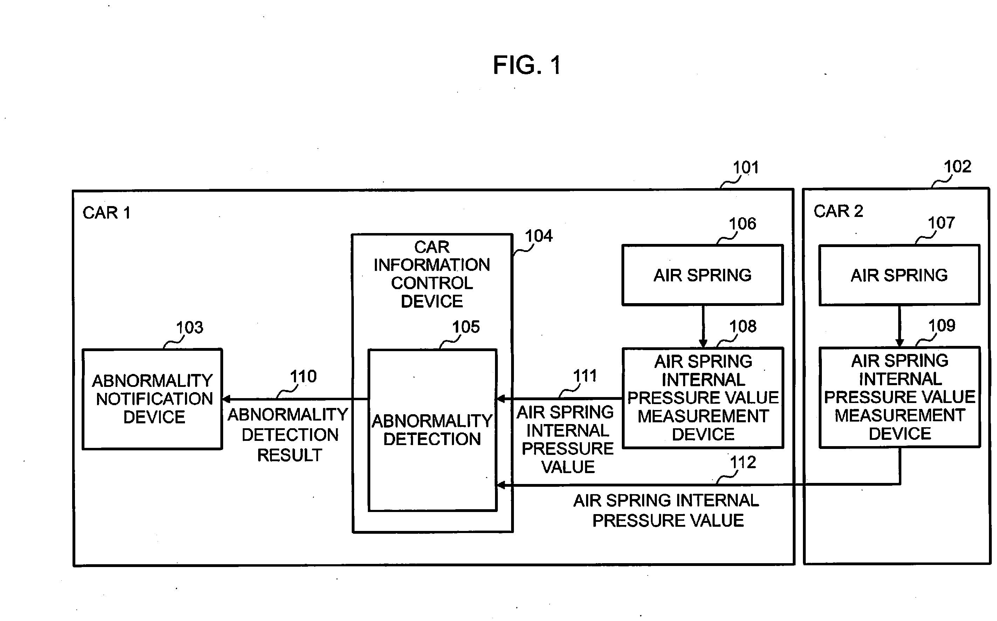

FIG. 1 is a diagram illustrating the configuration of an in-train abnormality detection system according to a first embodiment of the present invention. In FIG. 1, the in-train abnormality detection system includes a plurality of cars 101 and 102, an abnormality notification device 103, a car information control device 104, an abnormality detection logic 105, air springs 106 and 107, and air spring internal pressure value measurement devices 108 and 109. The car 101 is equipped with the abnormality notification device 103, the car information control device 104, the abnormality detection logic 105, the air spring 106, and the air spring internal pressure value measurement device 108. The car 102 is equipped with the air spring 107 and the air spring internal pressure value measurement device 109.

For example, the air springs 106 and 107 are composed of a diaphragm and laminated rubber and are each installed between a truck (not shown) and a car body (not shown) of the cars 101 and 102, respectively. The air spring internal pressure value measurement device 108 measures internal pressure values acting on the air spring 106 and outputs the measurement result as an air spring internal pressure value 111 to the car information control device 104. The air spring internal pressure value measurement device 109 measures internal pressure values acting on the air spring 107 and outputs the measurement result as an air spring internal pressure value 112 to the car information control device 104.

The car information control device 103 constantly incorporates the measurement results of the air spring internal pressure value measurement devices 108 and 109 during operation and monitors the air spring internal pressure values 111 and 112 of the air springs 106 and 107 mounted on the cars 101 and 102. The car information control device 103 monitors changes in the air spring internal pressure values 111 and 112 of the air springs 106 and 107 by using the abnormality detection logic 105. For example, when an abnormal movement is detected in the air spring internal pressure values 111 and 112 caused by the passenger's evacuation activity, an abnormality detection result 110 is output to the abnormality notification device 103 based on the assumption that an abnormality occurs in any of the cars 101 and 102. The abnormality notification device 103 gives notice of an abnormality on the condition that the abnormality detection result 110 is received. When the number of passengers is used to measure the passenger movement, the car information control device 103 can calculate the number of passengers in each car based on measured values (loads acting on the cars) of the air spring internal pressure value measurement devices 108 and 109 and the average weight of the passengers.

For example, the car information control device 104 is configured as a computer (not shown) that includes a processor, a main storage device, an auxiliary storage device, an input device, an output device, and a communication device.

For example, the processor uses a CPU (Central Processing Unit) or an MPU (Micro Processing Unit).

For example, the main storage device stores computer programs and data and is available as ROM (Read Only Memory), RAM (Random Access Memory), non-volatile semiconductor memory, and the like.

For example, the auxiliary storage device is available as a hard disk drive, an SSD (Solid State Drive), an optical storage medium (such as CD (Compact Disc) and DVD (Digital Versatile Disc)), a storage system, an IC card (Integrated Circuit Card), an SD (Secure Digital) memory card, and other storage media read/write devices as well as a storage area of a cloud server, and the like. Computer programs and data stored in the auxiliary storage device are read into the main storage device as needed.

For example, the computer programs stored in the auxiliary storage device include an abnormality detection program as the abnormality detection logic. The CPU reads the abnormality detection program from the auxiliary storage device and executes it to provide the function of the abnormality detection logic or an abnormality detection portion.

For example, the input devices include a keyboard, a mouse, a touch panel, a card reader, a voice input device and the like. The output device (display device) is a user interface that provides the user with various information such as process progress and the process results. For example, the output device is available as a screen display device (such as a liquid crystal monitor, LCD (Liquid Crystal Display), or graphics card), a voice output device (such as a speaker), or a printer, and the like.

The communication device is a wired or wireless communication interface that embodies communication with other devices via communication means such as a LAN or the Internet. For example, the communication device is available as a NIC (Network Interface Card), a wireless communication module, a USB (Universal Serial Bus) module, or a serial communication module, and the like.

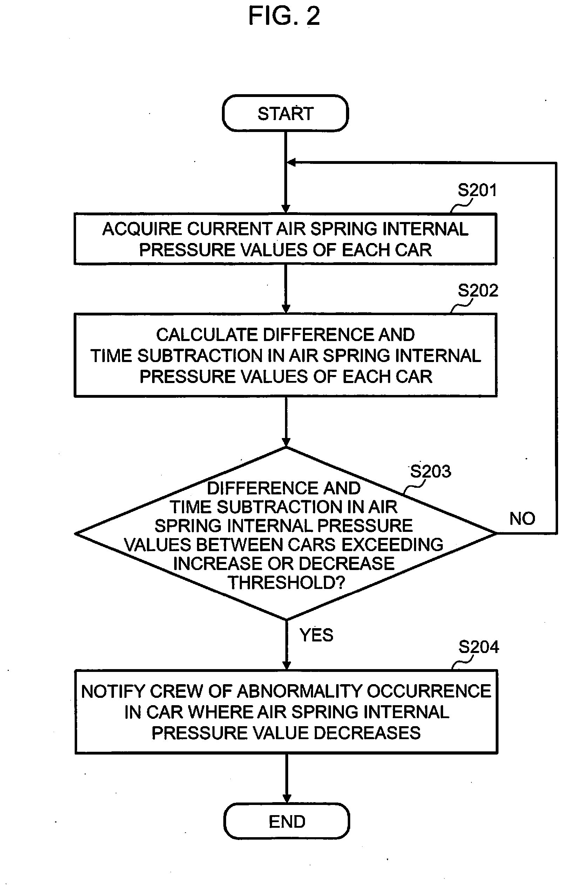

FIG. 2 is a flowchart illustrating processing of an abnormality detection logic according to the first embodiment of the present invention. In FIG. 2, this process starts when the processor activates the abnormality detection logic 105. The abnormality detection logic 105 acquires the air spring internal pressure values 111 and 112 measured by the air spring internal pressure value measurement devices 108 and 109 as the current air spring internal pressure values for each car (S201).

The abnormality detection logic 105 calculates an air spring internal pressure value difference and a time subtraction for each car based on the air spring internal pressure values 111 and 112 measured by the air spring internal pressure value measurement devices 108 and 109 (S202). At this time, the abnormality detection logic 105 calculates a time change (change per unit time) in the air spring internal pressure values 111 and 112 acquired at step S201 as an air spring internal pressure value difference for each car, compares the air spring internal pressure values 111 and 112 acquired at step S201 with the air spring internal pressure values 111 and 112 acquired at step S201 in the most recent processing loop (most recent measurement cycle), and calculates a comparison result indicating the difference between both as a time subtraction between the air spring internal pressure values of each car. The abnormality detection logic 105 acquires the air spring internal pressure values 111 and 112 per measurement cycle and calculates the difference between the acquired air spring internal pressure values 111 and 112 per measurement cycle as the time subtraction between the air spring internal pressure values of each car. The first calculation uses predetermined values for the air spring internal pressure values 111 and 112 acquired in the most recent processing loop. One processing loop signifies the process at steps S201 through step S203.

The abnormality detection logic 105 determines whether the air spring internal pressure value difference and the time subtraction for each car simultaneously exceed an increase threshold or a decrease threshold as the threshold to determine an abnormality occurrence, based on the calculation results of the air spring internal pressure value difference and the time subtraction for each car (S203).

If the determination result at step S203 is negative (NO), the abnormality detection logic 105 returns to step S201 and repeats the process at steps S201 through S203.

If the determination result at step S203 is affirmative (YES), the abnormality detection logic 105 outputs the abnormality detection result 110 to the abnormality notification device 103. For example, if an abnormality occurs in the car 101, the car 101 decreases the air spring internal pressure value 111 and the car 102 increases the air spring internal pressure value 112 due to the passenger's evacuation activity (the passenger in the car 101 moves to the car 102). Therefore, the car 101 causes the difference and the time subtraction in the air spring internal pressure values 111 to exceed the decrease threshold (the range of the abnormality determination values) and the car 102 causes the air spring internal pressure value difference and time subtraction to exceed the increase threshold (the range of the abnormality determination values). Specifically, the car 101 causes the difference and the time subtraction in the air spring internal pressure values 111 to be smaller than the decrease threshold and the car 102 causes the air spring internal pressure value difference and time subtraction to be greater than the increase threshold. In this case, the abnormality detection logic 105 outputs the abnormality detection result 110 to the abnormality notification device 103 to indicate that an abnormality occurs in the car 101.

The abnormality notification device 103 then notifies the crew that an abnormality occurs in the car where the air spring internal pressure value decreases. For example, when an abnormality occurs in the car 101, the abnormality notification device 103 notifies the crew that an abnormality occurs in the car 101, namely, the car where the air spring internal pressure value decreases.

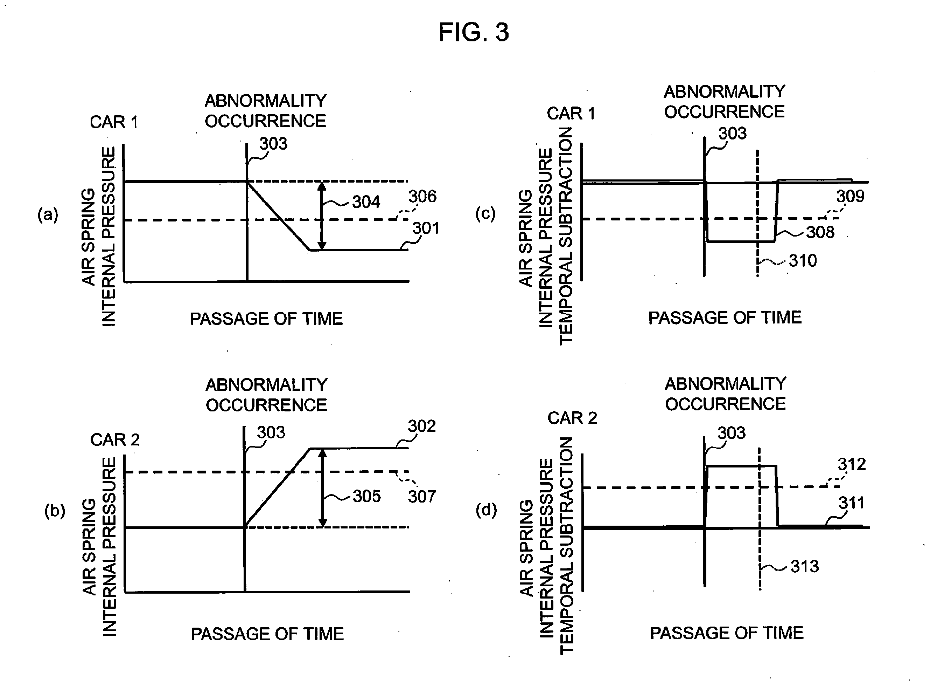

FIG. 3 is a characteristic diagram illustrating an air spring internal pressure and air spring internal pressure value time subtraction of each car in the in-train abnormality detection system according to the first embodiment of the present invention. FIG. 3(a) illustrates the behavior of the air spring internal pressure of the car 101, where the horizontal axis represents the elapsed time and the vertical axis represents the air spring internal pressure measured by the air spring internal pressure value measurement device 108. In FIG. 3(a), the air spring internal pressure (difference) of the car 101 (car 1) represents the air spring internal pressure value 301 and normally progresses at an approximately constant value over time. At time 303, an abnormality occurs in car 101 and the passenger in the car 101 evacuates to car 102 (car 2). Then, the air spring internal pressure value 301 in car 101 gradually decreases and a decrease 304 subsequently goes below a threshold 306 indicating the air spring internal pressure threshold for the decrease. The decrease 304 falls outside the range of the threshold 306 indicating the abnormality determination values.

FIG. 3(b) illustrates the behavior of the air spring internal pressure of car 102, where the horizontal axis represents the elapsed time and the vertical axis represents the air spring internal pressure measured by the air spring internal pressure value measurement device 109. In FIG. 3(b), the air spring internal pressure (difference) of car 102 (car 2) represents the air spring internal pressure value 302 and normally progresses at an approximately constant value over time. At time 303, an abnormality occurs in the car 101 and the passenger in the car 101 evacuates to the car 102 (car 2). Then, the air spring internal pressure value 301 in the car 101 gradually decreases. Meanwhile, an air spring internal pressure value 302 of the car 102 gradually increases and an increase 305 subsequently exceeds a threshold 307 indicating the air spring internal pressure threshold for the increase. The increase 305 falls outside the range of the threshold 307 indicating the abnormality determination values.

FIG. 3(c) illustrates the behavior of the air spring internal pressure value time subtraction of the car 101, where the horizontal axis represents the elapsed time and the vertical axis represents the air spring internal pressure value time subtraction measured by the air spring internal pressure value measurement device 108. In FIG. 3(c), the air spring internal pressure value time subtraction of the car 101 (car 1) represents an air spring internal pressure value time subtraction 308 and normally progresses at an approximately constant value over time. At time 303, an abnormality occurs in the car 101 and the passenger in the car 101 evacuates to the car 102 (car 2). Then, the air spring internal pressure value time subtraction 308 for the car 101 drastically decreases and goes below a threshold 309 indicating the air spring internal pressure value time subtraction. The air spring internal pressure value time subtraction 308 subsequently remains below the threshold 309 and returns to the original value when the evacuation of the passengers in the car 101 is completed. The air spring internal pressure value time subtraction 308 for the car 101 is determined to be abnormal when the air spring internal pressure value time subtraction 308 remains below the threshold 309 for a predetermined period or longer from time 303 and exceeds a duration threshold 310 indicating the air spring internal pressure value elapsed time threshold, namely, when the air spring internal pressure value time subtraction 308 continuously remains below the threshold 309 longer than or equal to the duration threshold 310.

FIG. 3(d) illustrates the behavior of the air spring internal pressure value time subtraction of car 102, where the horizontal axis represents the elapsed time and the vertical axis represents the air spring internal pressure value time subtraction measured by the air spring internal pressure value measurement device 109. In FIG. 3(d), the air spring internal pressure value time subtraction of car 102 (car 2) represents an air spring internal pressure value time subtraction 311 and normally progresses at an approximately constant value over time. At time 303, an abnormality occurs in the car 101 and the passenger in the car 101 evacuates to the car 102 (car 2). Then, the air spring internal pressure value time subtraction 308 for the car 101 decreases drastically and the air spring internal pressure value time subtraction 311 for the car 102 increases drastically and exceeds a threshold 312 indicating the air spring internal pressure value time subtraction threshold. The air spring internal pressure value time subtraction 311 subsequently exceeds the threshold 312 and returns to the original value when the evacuation of the passengers in the car 101 is completed. The air spring internal pressure value time subtraction 311 for car 102 is determined to be abnormal when the air spring internal pressure value time subtraction 311 exceeds the threshold 312 for a predetermined period or longer and exceeds a duration threshold 313 indicating the air spring internal pressure value elapsed time threshold, namely, when the air spring internal pressure value time subtraction 311 continuously exceeds the threshold 313 longer than or equal to the duration threshold 313.

An abnormality is detected in the car 101 (the car where the air spring internal pressure value 301 decreases) and the crew is notified of the information that an abnormality occurs in the car 101 when an abnormality occurs in the car 101 at time 303, the passenger in the car 101 evacuates to the car 102, the air spring internal pressure value 301 of the car 101 decreases, and the air spring internal pressure value 302 in the car 102 increases, and all of the following conditions (1) through (4) are satisfied.

(1) The decrease 304 in the air spring internal pressure value 301 goes below the threshold 306.
(2) The increase 305 in the air spring internal pressure value 302 exceeds the threshold 307.
(3) The air spring internal pressure value time subtraction 308 continuously remains below the threshold 309 longer than or equal to the duration threshold 310.
(4) The air spring internal pressure value time subtraction 311 continuously exceeds the threshold 312 longer than or equal to the duration threshold 313.

When an abnormality occurs in a car, it is possible to detect the evacuation activity of passengers moving from the car 101 where the abnormality occurred to the adjacent car 102. The crew can be notified of the car 101 where the abnormality occurred and can respond to the abnormality.

It is possible to detect an abnormality occurrence in the car 101 even if conditions (1) and (2) out of (1) through (4) are satisfied, If only conditions (1) and (2) are satisfied to detect an abnormality occurrence in the car 101, the decrease 304 and the increase 305 may not be measured accurately when the air spring internal pressure value 301 or 302 contains an error such as sudden noise or outliers, making it impossible to accurately detect an abnormality occurrence in the car 101. It is possible to detect an abnormality occurrence in any of the cars even if conditions (3) and (4) out of (1) through (4) are satisfied. However, it is difficult to identify the car where the abnormality occurs if only conditions (3) and (4) are satisfied. It is possible to accurately detect an abnormality occurrence in the car 101 when all of the conditions (1) through (4) are satisfied to detect an abnormality in the car.

The thresholds may be calculated based on empirical values or statistical information. The calculated values may be recorded previously in recording means such as memory or may be wirelessly transmitted from a ground station to the car. The values may be calculated based on data collected on the car.

For example, a method based on normal distribution can be used as a statistical technique to distinguish between a normal value and an abnormality value. The distinction between a normal value and an abnormality value just needs to determine a threshold and may use not only the normal distribution but also various statistical techniques such as t-distribution, F-distribution, Fisher's linear discriminant, quadratic discriminant analysis, support vector machine, and Bayesian statistics (MCMC method or conjugate distribution method).

One of the simplest methods to use the normal distribution is to take the average of finite time using the central limit theorem and collect the averages.

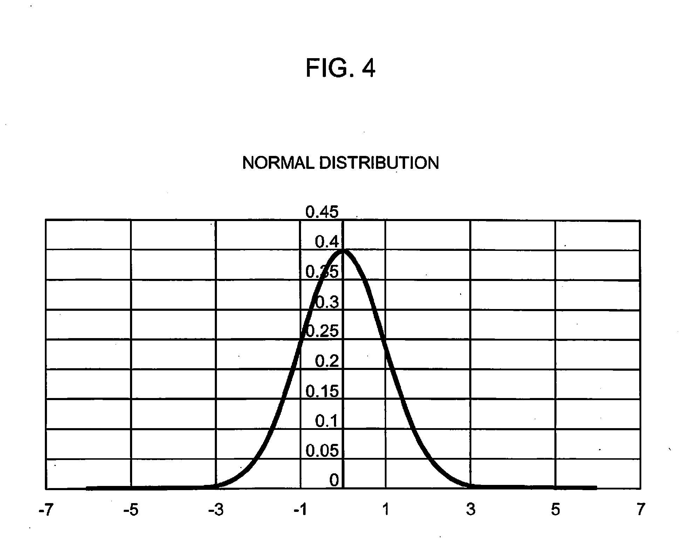

FIG. 4 is a characteristic diagram illustrating a normal distribution applied to the in-train abnormality detection system according to the first embodiment of the present invention. The horizontal axis represents the random variable, and the vertical axis represents the probability.

In FIG. 4, for example, suppose the one-minute average value X of the air spring internal pressure value at a certain point in time is 85, the average value $\mu$ of the air spring internal pressure values while the train stops is 100, and the standard deviation $\sigma$ is 3. Then, (1) in [Equation. 1] below can be used for calculation.

[Equation 1]

$$\frac{X-\mu}{\sigma} = (85 - 100)/3 = -5 \quad \cdot \cdot \cdot \quad (1)$$

According to the normal distribution, the probability of exceeding $\pm 5$ is approximately 0.000057%. Such a phenomenon can normally occur only once in approximately 29,240 hours.

Replacement of the above by an actual car is comparable to a case where 15 passengers move from the car accommodating 100 passengers to an adjacent car in a minute. This is comparable to a case where, when the car has doors on both sides, one person moves to an adjacent car every 8 seconds per door. This can hardly occur under normal circumstances. However, such an event can occur in a limited case where an abnormality occurs.

The average value X can be other values such as 30 seconds instead of 1 minute. The average value $\mu$ does not necessarily represent an average but can take a value at a time when the value is relatively stable (such as 1 minute after the door closes). The standard deviation may use values corresponding to similar X and $\mu$ values in the past or after the doors close or while the train stops. When the number of samples is small, it may be favorable to use the t-distribution instead of the normal distribution.

The above-described example uses the threshold "5" but other values may be used depending on the differences in railway operators or lines.

The present embodiment can measure the movement of passengers in a train and detect an abnormality in the train based on the measurement results without using footage-based information. When an abnormality occurs in a car, the present embodiment can detect the evacuation activity of passengers moving from the car 101 where the abnormality occurred to the adjacent car 102. The crew can be notified of the car 101 where the abnormality occurred and can respond to the abnormality. The present embodiment can detect abnormalities in existing trains equipped with no surveillance cameras under the condition that the air spring internal pressure value measurement device and the car information control device are mounted and the software (abnormality detection logic) installed on the car information control device is modified. It is possible to significantly reduce the cost of installing equipment on existing trains that do not include surveillance cameras.

Second Embodiment

The second embodiment is an abnormality detection method of dealing with a situation in which passengers escape through windows, for example, when an abnormality occurs while a train stops and the passengers are confined to the train. This situation decreases the amount of evacuation activity of passengers moving to cars where no abnormality occurs. To deal with this, the second embodiment uses an abnormality detection method that uses the total air spring internal pressure value for the entire car. If some passengers escape through a window, for example, when an abnormality occurs, the amount of movement between cars decreases. The method of the first embodiment cannot detect the abnormality. Some abnormality likely occurs in the car when the total air spring internal pressure value for the entire train decreases even though the train stops at a station or the door is not opened. In consideration of this, the present embodiment uses the method that detects abnormalities in the car based on the total air spring internal pressure value for the entire set car and the corresponding time subtraction.

Like the first embodiment, the present embodiment also describes the air spring internal pressure value measurement device as a representative example of measurement means to measure passenger movement. Like the first embodiment, the present embodiment can use other means as the measurement means.

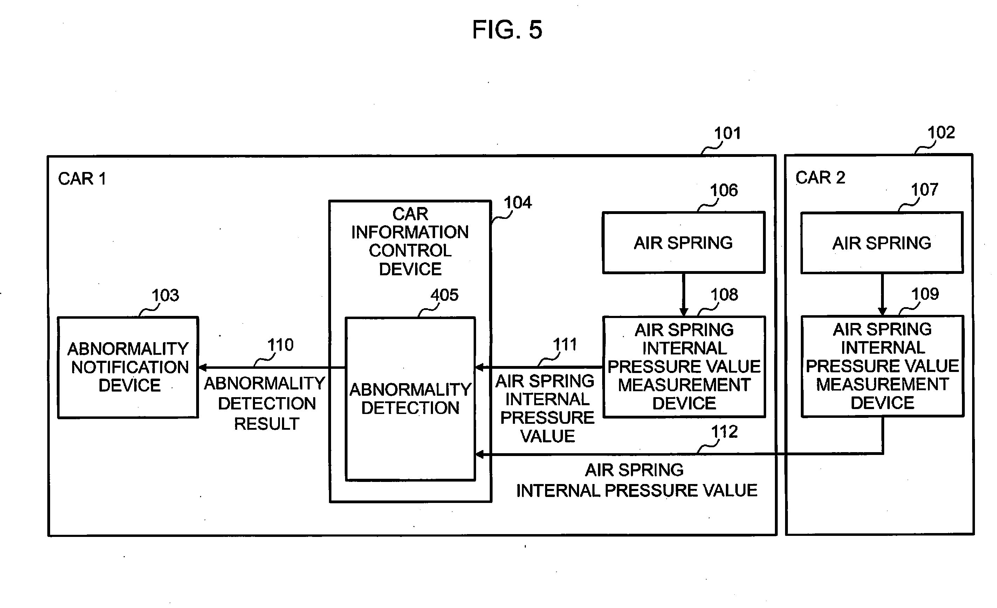

FIG. 5 is a diagram illustrating the configuration of an in-train abnormality detection system according to a second embodiment of the present invention. According to the present embodiment, the car information control device 104 includes an abnormality detection logic 405 instead of the abnormality detection logic 105. The other configurations are equal to those of the first embodiment. The description below explains the process of an abnormality detection logic 405 with a focus on differences from the first embodiment in the process.

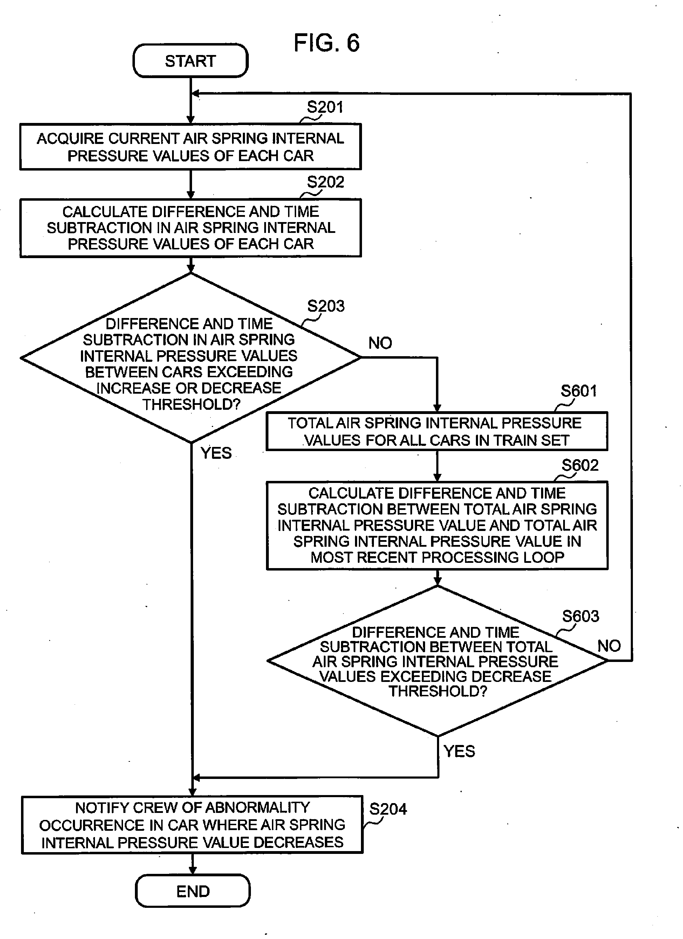

FIG. 6 is a flowchart illustrating processing of an abnormality detection logic according to a second embodiment of the present invention. This process starts when the processor activates the abnormality detection logic 405. The processes at steps S201 through S204 are similar to those at steps S201 to S204 in FIG. 2. The description of the corresponding processes are omitted. If the result at step S204 is negative, the process proceeds to step S601 instead of returning to step S201.

If the determination result at step S203 is negative (NO), the abnormality detection logic 405 totals the air spring internal pressure values for all cars in the train set (S601). For example, when the cars 101 and 102 are set cars, the abnormality detection logic 405 acquires and totals the air spring internal pressure values 111 and 112 measured by the air spring internal pressure value measurement devices 108 and 109 as the air spring internal pressure value for all cars in the train set.

The abnormality detection logic 405 calculates a difference and a time subtraction between the total air spring internal pressure value and the total air spring internal pressure value in the most recent processing loop based on the air spring internal pressure values 111 and 112 measured by the air spring internal pressure value measurement devices 108 and 109 (S602). At this time, the abnormality detection logic 405 compares the total value of the air spring internal pressure values 111 and 112 acquired at step S601 with the total value of the air spring internal pressure values 111 and 112 acquired in the most recent processing loop and calculates a difference and a time subtraction between the total air spring internal pressure values.

The abnormality detection logic 405 determines whether the difference and the time subtraction between the total air spring internal pressure values exceed the decrease threshold based on the calculation result of the difference and the time subtraction between the air spring internal pressure values (S603).

If the determination result at step S603 is negative (NO), the abnormality detection logic 405 returns to step S201 and repeats the process at steps S201 through S203.

If the determination result at step S603 is affirmative (YES), the abnormality detection logic 405 outputs the abnormality detection result 110 to the abnormality notification device 103. For example, suppose an abnormality occurs in car 101, some passengers in car 101 escape through a window, and the remaining passengers confined to car 101 move from car 101 to car 102. In this case, the number of passengers moving due to the evacuation activity decreases compared to the first embodiment. The abnormality detection logic 405 outputs the abnormality detection result 110 indicating an abnormality occurrence in the set car to the abnormality notification device 103 on the condition that the total air spring internal pressure value for the entire car exceeds the decrease threshold.

The abnormality notification device 103 then notifies the crew that an abnormality occurs in the car where the air spring internal pressure value decreases (S204). For example, when an abnormality occurs in the set car, the abnormality notification device 103 notifies the crew that the abnormality occurs in a car where the air spring internal pressure value decreases.

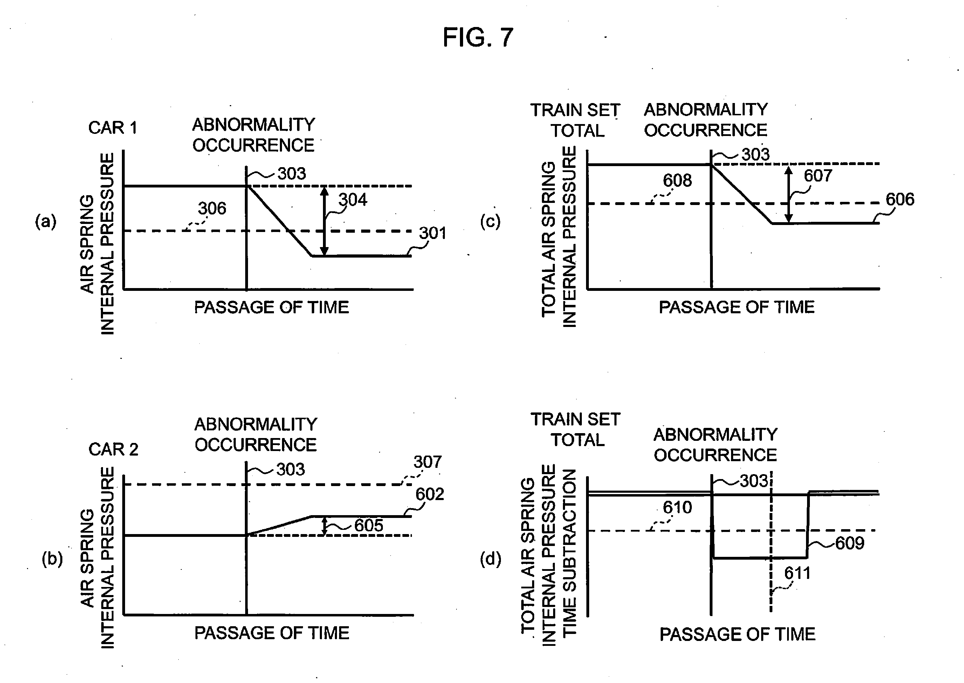

FIG. 7 is a characteristic diagram illustrating an air spring internal pressure and air spring internal pressure value time subtraction of each car and set car in the in-train abnormality detection system according to the second embodiment of the present invention. FIG. 7(a) illustrates the behavior of the air spring internal pressure of the car 101, where the horizontal axis represents the elapsed time and the vertical axis represents the air spring internal pressure measured by the air spring internal pressure value measurement device 108. In FIG. 7(a), the air spring internal pressure (difference) of the car 101 (car 1) represents the air spring internal pressure value 301 and normally progresses at an approximately constant value over time. Suppose an abnormality occurs in the car 101 at time 303, some passengers in the car 101 escape outside car 101 through a window, for example, and the remaining passengers evacuate to the car 102 (car 2). In this case, the air spring internal pressure value 301 of the car 101 gradually decreases. The decrease 304 subsequently goes below the threshold 306 indicating the air spring internal pressure threshold for the decrease. The decrease 304 falls outside the range of the threshold 306 indicating the abnormality determination values.

FIG. 7(b) illustrates the behavior of the air spring internal pressure of car 102, where the horizontal axis represents the elapsed time and the vertical axis represents the air spring internal pressure measured by the air spring internal pressure value measurement device 109. In FIG. 7(b), the air spring internal pressure (difference) of car 102 (car 2) represents the air spring internal pressure value 602 and normally progresses at an approximately constant value over time. Suppose an abnormality occurs in the car 101 at time 303, some passengers in the car 101 escape outside car 101 through a window, for example, and the remaining passengers evacuate to the car 102 (car 2). In this case, an air spring internal pressure value 602 for the car 102 gradually increases. An increase 605 in the air spring internal pressure value 602 for car 102 is subsequently maintained at a value smaller than the threshold 307 indicating the air spring internal pressure threshold for the increase. The increase 605 falls outside the range of the threshold 307 indicating the abnormality determination values.

FIG. 7(c) illustrates the behavior of the total air spring internal pressure for the entire set car (train set total) including the cars 101 and 102, where the horizontal axis represents the elapsed time and the vertical axis represents the total air spring internal pressure measured by the air spring internal pressure value measurement devices 108 and 109. In FIG. 7(c), the total air spring internal pressure for the entire set car normally progresses at an approximately constant value over time represented as a total air spring internal pressure value 606 for the entire train set. Suppose an abnormality occurs in the car 101 at time 303, some passengers in the car 101 escape outside car 101 through a window, for example, and the remaining passengers evacuate to the car 102 (car 2). In this case, the total air spring internal pressure value 606 for the train set total (entire set car) gradually decreases and goes below a threshold 608 indicating a total air spring internal pressure threshold for the decrease in the entire set car.

FIG. 7(d) illustrates the behavior of a total air spring internal pressure time subtraction for the entire set car, where the horizontal axis represents the elapsed time and the vertical axis represents the total air spring internal pressure time subtraction measured by the air spring internal pressure value measurement devices 108 and 109. In FIG. 7(d), the total air spring internal pressure time subtraction for the entire set car normally progresses at an approximately constant value over time represented as a total air spring internal pressure value time subtraction 609 for the entire set car. Suppose an abnormality occurs in the car 101 at time 303, some passengers in the car 101 escape outside the car 101 through a window, for example, and the remaining passengers evacuate to the car 102 (car 2). In this case, the total air spring internal pressure time subtraction 609 for the entire set car drastically decreases and goes below a threshold 610 indicating a total air spring internal pressure value time subtraction threshold for the entire set car. The total air spring internal pressure value time subtraction 609 for the entire set car subsequently remains below the threshold 610 and returns to the original value when the evacuation of the passengers in the car 101 is completed. The total air spring internal pressure value time subtraction 609 for the entire set car is determined to be abnormal when the total air spring internal pressure value time subtraction 609 for the entire set car remains below the threshold 610 for a predetermined period or longer from time 303 and exceeds a duration threshold 611 indicating a total air spring internal pressure value time subtraction elapsed time threshold for the entire set car, namely, when the total air spring internal pressure value time subtraction 609 for the entire set car continuously remains below the threshold 610 longer than or equal to the duration threshold 611.

An abnormality occurrence in the car 101 is detected and the crew is notified of the information that the abnormality occurs in the car 101 when the abnormality occurs in the car 101 at time 303, some passengers in the car 101 escape outside the car 101 through a window, for example, the remaining passengers evacuate to the car 102 (car 2), the air spring internal pressure value 301 of the car 101 decreases, the air spring internal pressure value 602 in the car 102 increases, and all the following conditions (1) and (2) are satisfied.

(1) The air spring internal pressure value 606 goes below the total air spring internal pressure threshold 608.
(2) The total air spring internal pressure value time subtraction 609 continuously remains below the threshold 610 longer than or equal to the duration threshold 611.

The present embodiment can detect an abnormality in the car based on the total air spring internal pressure value for the entire set car and the corresponding time subtraction even when the abnormality occurs while passengers are confined to the stopped train and escape through a window, for example. When an abnormality occurs in a car, the present embodiment can detect an evacuation activity of passengers who move to the adjacent car 102 from the car 101 where the abnormality occurs. The crew can be notified of the car 101 as the car where the abnormality occurs based on the largest decrease in the air spring internal pressure value 301 or 602, making it possible to respond to the abnormality. The thresholds can be set in the same way as in the first embodiment.

Third Embodiment

The third embodiment detects abnormalities occurring in a running car. When the car is running, the air spring internal pressure value is subject to fluctuations due to the car movement in addition to fluctuations due to the evacuation activity of the passengers. To deal with this, the third embodiment uses a method that compares an air spring internal pressure baseline value acquired by analyzing running data and car motions in the past with the measured air spring internal pressure value and detects abnormalities in the car based on the comparison results.

Like the first embodiment, the present embodiment describes the air spring internal pressure value measurement device as a representative example of measurement means to measure passenger movement. Like the first embodiment, the present embodiment can use other means as the measurement means.

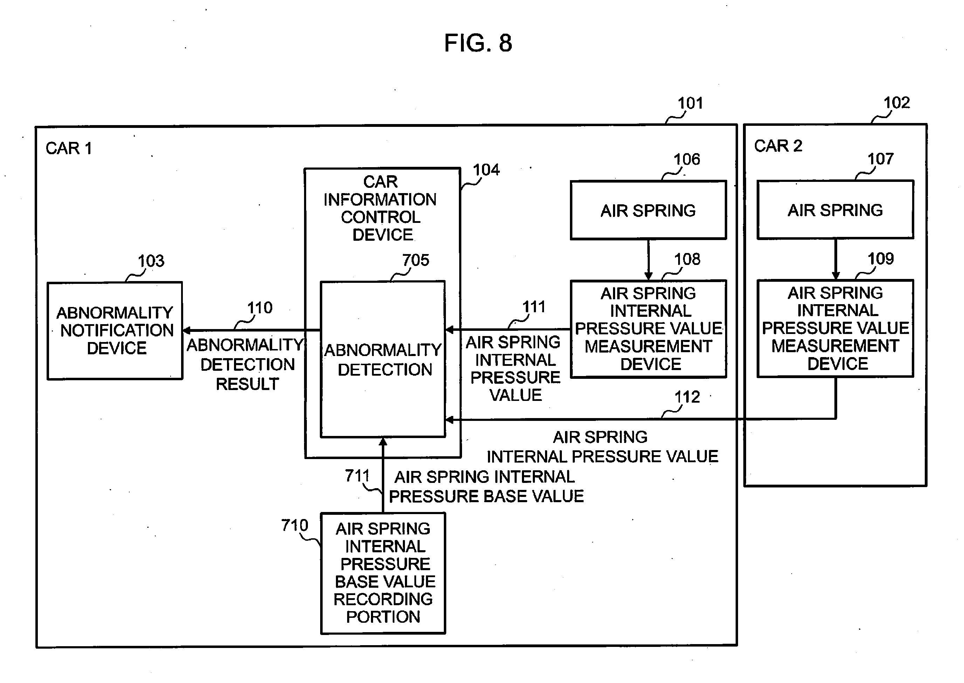

FIG. 8 is a diagram illustrating the configuration of an in-train abnormality detection system according to a third embodiment of the present invention. According to the present embodiment, the car information control device 104 includes an abnormality detection logic 705 instead of the abnormality detection logic 105. The car 101 includes an air spring internal pressure base value recording portion 710 as an air spring internal pressure base value recording device to record the air spring internal pressure base value. An air spring internal pressure base value 711 recorded in the air spring internal pressure base value recording portion 710 is output to the car information control device 104. The other configurations are equal to those of the first embodiment. The description below explains the process of the abnormality detection logic 705 with a focus on differences from the first embodiment in the process.

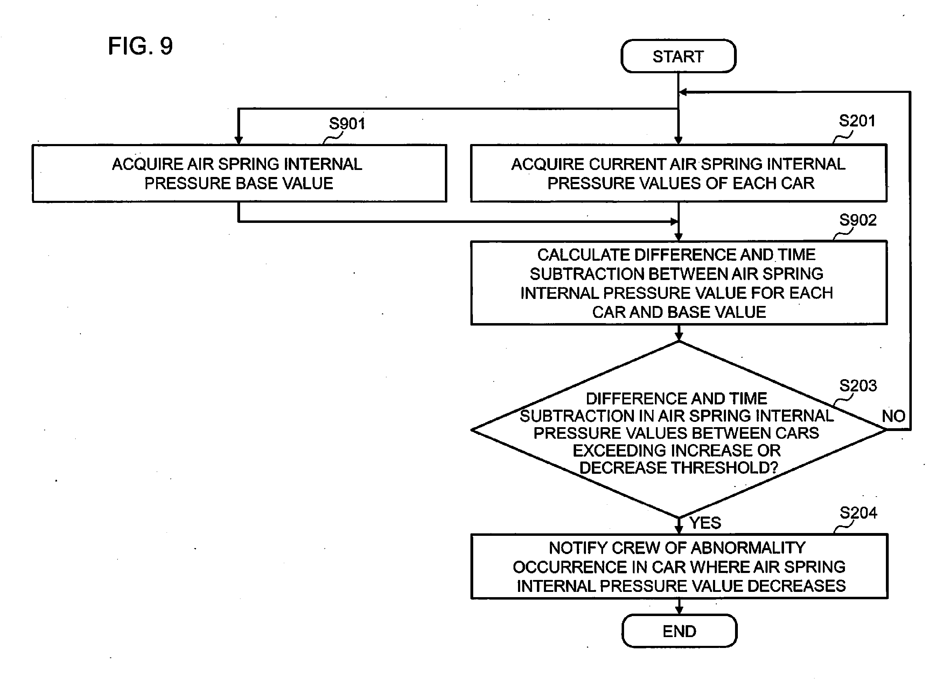

FIG. 9 is a flowchart illustrating processing of an abnormality detection logic according to a third embodiment of the present invention. This process starts when the processor activates the abnormality detection logic 705. The process at step S901 is performed concurrently with step S201. The process at step S902 is performed between step S201 and step S203. The processes at steps S201, S203, and S204 are similar to those at steps S201, S203, and S204 in FIG. 2.

The abnormality detection logic 705 performs the process of acquiring the current air spring internal pressure value for each car (S201) and concurrently acquires the air spring internal pressure base value 711 recorded in the air spring internal pressure base value recording portion 710 from the air spring internal pressure base value recording portion 710 (S901).

The abnormality detection logic 705 calculates a difference and a time subtraction between the air spring internal pressure value for each car and the base value based on the current air spring internal pressure value for each car acquired at step S201 and the air spring internal pressure base value 711 acquired at step S901 (S902).

When an abnormality occurs in the running train, the air spring internal pressure value fluctuates due to the running motion of the train in addition to the movement of the passengers. This requires performing the process that compares the air spring internal pressure value for each car with the base value.

Past data can be used to deduce fluctuations of the air spring internal pressure value due to the running motion of the train when no abnormality occurs. A specific method may reference past data of the air spring internal pressure values for the same car, the same running section, and the similar boarding rate, hourly average the acquired data for each running section, and thereby find a base value of the air spring internal pressure values. Another method may analytically solve car oscillations and force acting on the air spring based on car speeds, railway line shapes, boarding rates, and car specifications, for example, and find the air spring internal pressure base value.

The method finds the air spring internal pressure base value 711 as a reference value for fluctuations in the change in the air spring internal pressure value due to the car running, finds a difference and a time subtraction between an actual air spring internal pressure value 901 and the air spring internal pressure base value 711, and finds a difference and a time subtraction between the actual air spring internal pressure value 902 and the air spring internal pressure base value 711.

Based on the calculation result at step S902, the abnormality detection logic 705 determines whether the air spring internal pressure value difference and the time subtraction for each car simultaneously exceed the increase threshold or decrease threshold as the threshold of the abnormality determination values (S203).

If the determination result at step S203 is negative (NO), the abnormality detection logic 705 returns to step S201 and repeats the process at steps S201, S901, S902 and S203.

If the determination result at step S203 is affirmative (YES), the abnormality detection logic 705 outputs the abnormality detection result 110 to the abnormality notification device 103. For example, if an abnormality occurs in the car 101 while the train is running, the passenger's evacuation activity (evacuation activity of passengers in the car 101 moving to car 102) causes the air spring internal pressure value 111 to be smaller than the air spring internal pressure base value 711 in the car 101 and causes the air spring internal pressure value 112 to be greater than the air spring internal pressure base value 711 in the car 102. The air spring internal pressure values 111 and 112 fluctuate due to not only the passenger's evacuation activity but also the movement of the cars 101 and 102. The air spring internal pressure values 111 and 112 are affected by not only the fluctuations due to the passenger's evacuation activity but also the fluctuations due to the movement of the cars 101 and 102.

In the car 101, the difference and the time subtraction between the air spring internal pressure value 111 and the air spring internal pressure base value 711 go below the decrease threshold. In the car 102, the difference and the time subtraction between the air spring internal pressure value 112 and the air spring internal pressure base value 711 exceed the increase threshold. In this case, the abnormality detection logic 705 outputs the abnormality detection result 110 to the abnormality notification device 103 to indicate that an abnormality occurs in the car 101.

The abnormality notification device 103 then notifies the crew that an abnormality occurs in the car where the air spring internal pressure value decreases. For example, when an abnormality occurs in a car while the train is running, the abnormality notification device 103 notifies the crew that an abnormality occurs in the car 101, namely, the car where the air spring internal pressure value decreases.

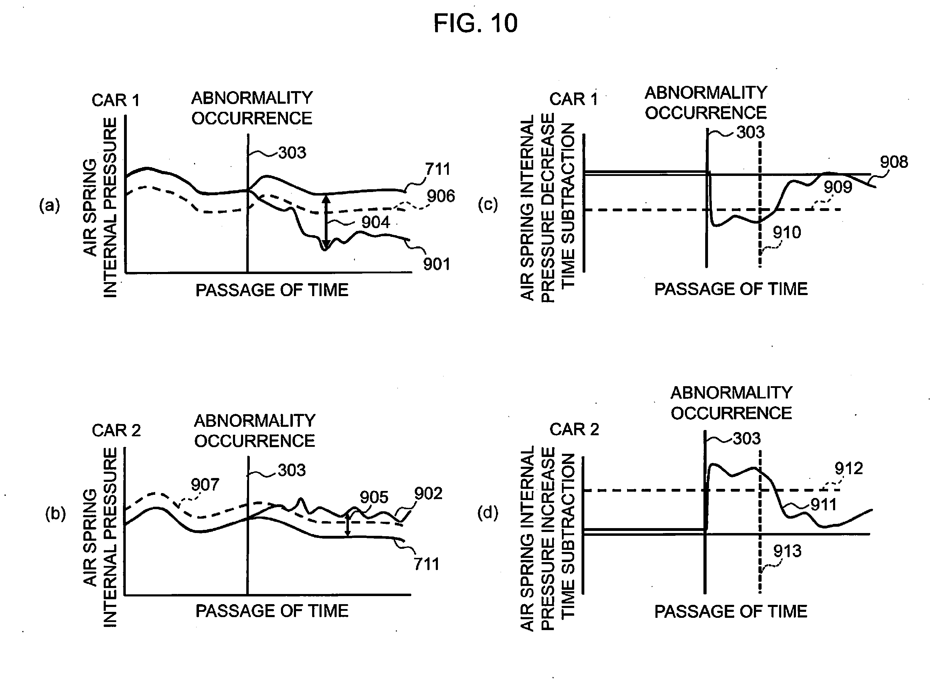

FIG. 10 is a characteristic diagram illustrating an air spring internal pressure and air spring internal pressure change time subtraction of each car in the in-train abnormality detection system according to the third embodiment of the present invention. FIG. 10(a) illustrates the behavior of the air spring internal pressure of the car 101, where the horizontal axis represents the elapsed time and the vertical axis represents the air spring internal pressure measured by the air spring internal pressure value measurement device 108. In FIG. 10(a), the air spring internal pressure (difference) of the car 101 (car 1) is represented as the air spring internal pressure value 901 and normally changes over time in accordance with oscillations of the car 101 (car 1). Suppose an abnormality occurs in the car 101 at time 303 while the train is running, and the passenger in the car 101 evacuates to the car 102 (car 2). Then, the air spring internal pressure value 901 in the car 101 gradually decreases and a decrease 904 (including high-frequency components due to the passenger movement), indicating a difference between the air spring internal pressure value 901 and the air spring internal pressure base value 711, subsequently goes below a threshold 906 indicating the air spring internal pressure threshold. The decrease 904 falls outside the range of the threshold 906 indicating the abnormality determination values.

FIG. 10(b) illustrates the behavior of the air spring internal pressure of car 102, where the horizontal axis represents the elapsed time and the vertical axis represents the air spring internal pressure measured by the air spring internal pressure value measurement device 109. In FIG. 10(b), the air spring internal pressure (difference) of the car 102 (car 2) is represented as the air spring internal pressure value 902 and normally changes over time in accordance with oscillations of the car 102 (car 2). Suppose an abnormality occurs in the car 101 at time 303 while the train is running, and the passenger in the car 101 evacuates to the car 102 (car 2). Then, the air spring internal pressure value 902 of the car 102 gradually increases and an increase 905 (including high-frequency components due to the passenger movement), indicating a difference between the air spring internal pressure value 902 and the air spring internal pressure base value 711, subsequently exceeds a threshold 907 indicating the air spring internal pressure threshold. The increase 904 falls outside the range of the threshold 907 indicating the abnormality determination values.

FIG. 10(c) illustrates the behavior of an air spring internal pressure decrease time subtraction of the car 101, where the horizontal axis represents the elapsed time and the vertical axis represents the air spring internal pressure decrease time subtraction measured by the air spring internal pressure value measurement device 108. In FIG. 10(c), the air spring internal pressure decrease time subtraction of the car 101 (car 1) is represented as an air spring internal pressure value decrease time subtraction 908 and progresses at an approximately constant value over time. Suppose an abnormality occurs in the car 101 at time 303 while the train is running, and the passenger in the car 101 evacuates to the car 102 (car 2). Then, the air spring internal pressure value decrease time subtraction 908 for the car 101 drastically decreases and goes below a threshold 909 indicating the air spring internal pressure value decrease time subtraction threshold. The air spring internal pressure value decrease time subtraction 908 subsequently remains below the threshold 909 and returns approximately to the original value when the evacuation of the passengers in the car 101 is completed. The air spring internal pressure decrease time subtraction 908 for the car 101 is determined to be abnormal when the air spring internal pressure value decrease time subtraction 908 remains below the threshold 909 for a predetermined period or longer from time 303 and exceeds a duration threshold 910 indicating the elapsed time threshold for the air spring internal pressure value decrease, namely, when the air spring internal pressure value decrease time subtraction 908 continuously remains below the threshold 909 longer than or equal to the duration threshold 910.

FIG. 10(d) illustrates the behavior of an air spring internal pressure increase time subtraction for car 102, where the horizontal axis represents the elapsed time and the vertical axis represents the air spring internal pressure increase time subtraction measured by the air spring internal pressure value measurement device 109. In FIG. 3(d), the air spring internal pressure value time subtraction of car 102 (car 2) is represented as an air spring internal pressure value increase time subtraction 911 and progresses at an approximately constant value over time. Suppose an abnormality occurs in the car 101 at time 303 while the train is running, and the passenger in the car 101 evacuates to the car 102 (car 2). Then, the air spring internal pressure value decrease time subtraction 908 for the car 101 decreases drastically, and the air spring internal pressure value increase time subtraction 911 for the car 102 increases drastically and exceeds a threshold 912 indicating the air spring internal pressure value increase time subtraction threshold. The air spring internal pressure value increase time subtraction 911 subsequently exceeds the threshold 912 and returns approximately to the original value when the evacuation of the passengers in the car 101 is completed. The air spring internal pressure value time subtraction 311 for car 102 is determined to be abnormal when the air spring internal pressure value increase time subtraction 911 exceeds the threshold 912 for a predetermined period or longer from time 303 and exceeds a duration threshold 913 indicating the air spring internal pressure value elapsed time threshold, namely, when the air spring internal pressure value increase time subtraction 911 continuously exceeds the threshold 912 longer than or equal to the duration threshold 913.

An abnormality occurrence in the car 101 is detected and the crew is notified of the information that the abnormality occurs in the car 101 when the abnormality occurs in the car 101 at time 303 while the train is running, the passenger in the car 101 evacuates to the car 102, the air spring internal pressure value 901 of the car 101 decreases, the air spring internal pressure value 902 of the car 102 increases, and all the following conditions (1) through (4) are satisfied.

(1) The air spring internal pressure value 901 of the car 101 goes below the air spring internal pressure threshold 906 of the car 101.

(2) The air spring internal pressure value 902 of the car 102 exceeds the air spring internal pressure threshold 907 of the car 102.

(3) The air spring internal pressure value decrease time subtraction 908 for the car 101 continuously remains below the threshold 909 longer than or equal to the duration threshold 910.

(4) The air spring internal pressure value increase time subtraction 911 for car 102 continuously exceeds the threshold 912 longer than or equal to the duration threshold 913.

When an abnormality occurs in a car while the train is running, the present embodiment can detect the evacuation activity of passengers moving from the car 101 where the abnormality occurred to the adjacent the car 102. The crew can be notified of the car 101 where the abnormality occurred and can respond to the abnormality. The thresholds can be set in the same way as in the first embodiment. It is possible to detect that an abnormality occurrence in the car 101 even if conditions (1) and (2) out of (1) through (4) are satisfied on the condition that the air spring internal pressure value 901 or 902 does not include an error such as sudden noise or outliers.

Fourth Embodiment

The fourth embodiment is an abnormality detection method when the train stops at a station and the door is opened. When the train stops at a station and the door is opened, the passenger evacuation activity is expected to cause large-scale evacuation activity of passengers moving outside the train. Because the door is opened, it is impossible to determine whether an abnormality occurs based on the method according to the second embodiment that uses the total air spring internal pressure value for the entire car. To deal with this, the fourth embodiment provides the abnormality detection method using the air spring internal pressure base value acquired by processing past driving data.

Like the first embodiment, the present embodiment describes the air spring internal pressure value measurement device as a representative example of measurement means to measure passenger movement. Like the first embodiment, the present embodiment can use other means as the measurement means.

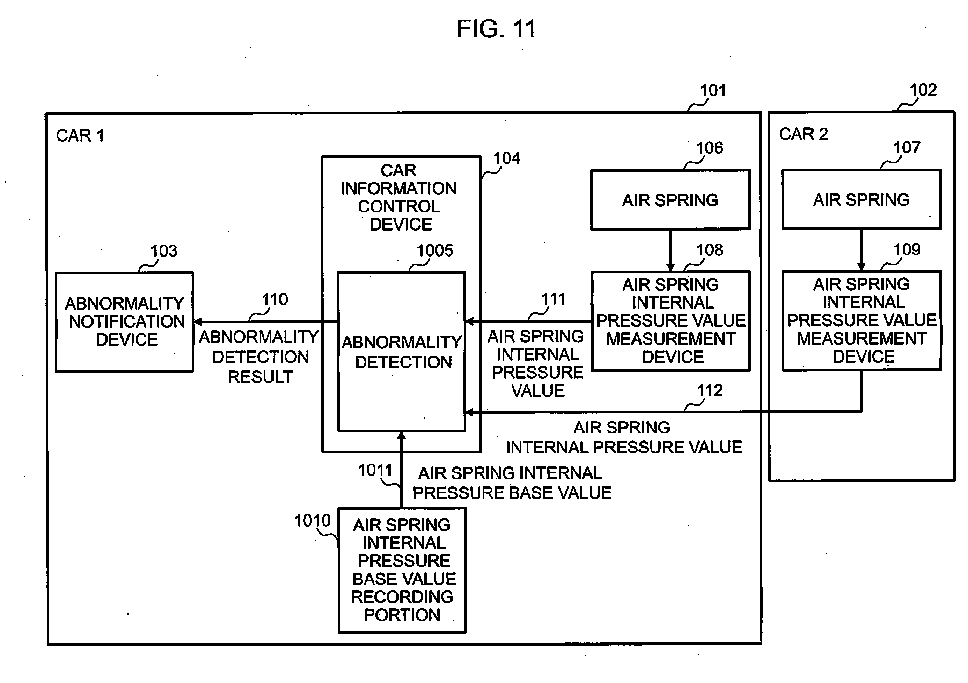

FIG. 11 is a diagram illustrating the configuration of an in-train abnormality detection system according to a fourth embodiment of the present invention. According to the present embodiment, the car information control device 104 includes an abnormality detection logic 1005 instead of the abnormality detection logic 105. The car 101 includes an air spring internal pressure base value recording portion 1010 to record the air spring internal pressure base value. An air spring internal pressure base value 1011 recorded in the air spring internal pressure base value recording portion 1010 is output to the car information control device 104. The other configurations are equal to those of the first embodiment. The description below explains the process of the abnormality detection logic 1005 with a focus on differences from the first embodiment in the process.

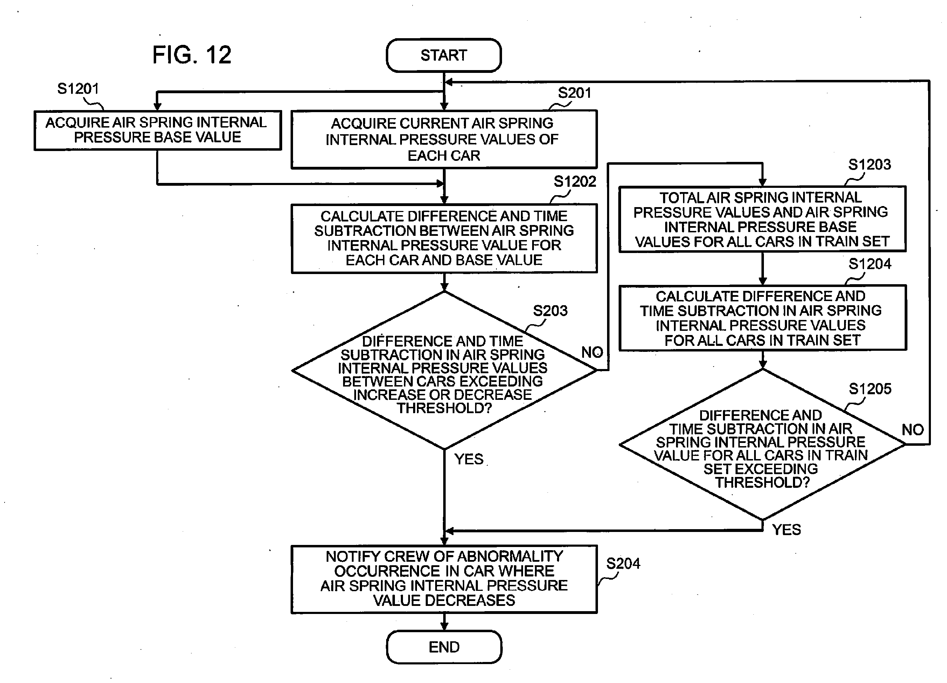

FIG. 12 is a flowchart illustrating processing of an abnormality detection logic according to a fourth embodiment of the present invention. This process starts when the processor activates the abnormality detection logic 1005. As a process different from that in FIG. 2, the process at step S1201 is performed in parallel with step S201. The process at step S1202 is performed between step S201 and step S203. The processes at steps S1203 through S1205 are performed between step S203 and step S204. The processes at steps S201, S203, and S204 are similar to those at steps S201, S203, and S204 in FIG. 2.

The abnormality detection logic 1005 performs the process of acquiring the current air spring internal pressure value for each car (step S201) and concurrently acquires the air spring internal pressure base value 1011 recorded in the air spring internal pressure base value recording portion 1010 from the air spring internal pressure base value recording portion 1010 (S1201).

The abnormality detection logic 1005 calculates a difference and a time subtraction between the air spring internal pressure value for each car and the base value based on the current air spring internal pressure value for each car acquired at step S201 and the air spring internal pressure base value 1011 acquired at step S1201 (S1202).

When an abnormality occurs in the car when the door is opened, passengers are considered to escape altogether outside the train through the door. Compared to normal circumstances, a station shows a decrease in the number of passengers who will board the car where the abnormality occurs. The air spring internal pressure value decreases greatly more than the fluctuation caused by passengers getting on and off while the door is opened under normal circumstances. When no abnormality occurs, like in the third embodiment, past data can be used to deduce the fluctuation of the air spring internal pressure value caused by passengers getting on and off while the car door is opened. Based on the deduction, the method finds the fluctuation of the air spring internal pressure value caused by the car running as an air spring internal pressure base value and calculates the difference and the time subtraction between the actual air spring internal pressure value and the air spring internal pressure base value.

The method finds the base value for fluctuations in the air spring internal pressure value due to the car running as the air spring internal pressure base value 711, finds the difference and the time subtraction between the actual air spring internal pressure value 901 and the air spring internal pressure base value 711, and finds the difference and the time subtraction between the actual air spring internal pressure value 902 and the air spring internal pressure base value 711.

Based on the calculation result at step S1202, the abnormality detection logic 1005 determines whether the air spring internal pressure value difference and the time subtraction for each car simultaneously exceed the increase threshold or decrease threshold as the threshold of the abnormality determination values (S203).

The abnormality detection logic 1005 proceeds to the process at step S204 if the determination result at step S203 is affirmative (YES) or proceeds to the process at step S1203 if the determination result at step S203 is negative (NO).

If the determination result at step S203 is negative (NO), the abnormality detection logic 1005 totals the air spring internal pressure values and the air spring internal pressure base values for all the cars in the train set (S1203). For example, when cars 101 and 102 are set cars, the abnormality detection logic 1005 totals the air spring internal pressure values 111 and 112 for each car acquired at step S201 as the air spring internal pressure values for all cars as the set cars, acquires the air spring internal pressure base values 1011 from the air spring internal pressure base value recording portion 1010, and totals them as the air spring internal pressure base value for all cars as set cars.

Based on the calculation results at step S1203, the abnormality detection logic 1005 calculates the difference and the time subtraction in the air spring internal pressure values for all the cars in the train set (S1204). The abnormality detection logic 1005 compares the total of the air spring internal pressure base values 1011 acquired at step S1201 with the total of the air spring internal pressure values 111 and 112 acquired in the most recent processing loop (most recent measurement cycle) and calculates the comparison result indicating the difference between both as a time subtraction for the total of the air spring internal pressure values.

Based on the calculation result at step S1204, the abnormality detection logic 1005 determines whether the difference and the time subtraction in the air spring internal pressure value (total value) for all cars in the train set exceeds the threshold (S1205).

If the determination result at step S1205 is negative (NO), the abnormality detection logic 1005 returns to steps S201, S1201 and repeats the process at steps S201 through S203, and S1201.

If the determination result at step S1203 is affirmative (YES), the abnormality detection logic 1005 outputs the abnormality detection result 110 to the abnormality notification device 103. For example, suppose an abnormality occurs in car 101, some passengers in car 101 escape through a window, and the remaining passengers confined to car 101 move from car 101 to car 102. In this case, the number of passengers moving due to the evacuation activity decreases compared to the first embodiment. The abnormality detection logic 1005 outputs the abnormality detection result 110 indicating an abnormality occurrence in the set car to the abnormality notification device 103 on the condition that the total air spring internal pressure value for the entire car exceeds the decrease threshold.

The abnormality notification device 103 then notifies the crew that an abnormality occurs in the car where the air spring internal pressure value decreases (S204). For example, when an abnormality occurs in the set car, the abnormality notification device 103 notifies the crew that the abnormality occurs in a car where the air spring internal pressure value decreases.

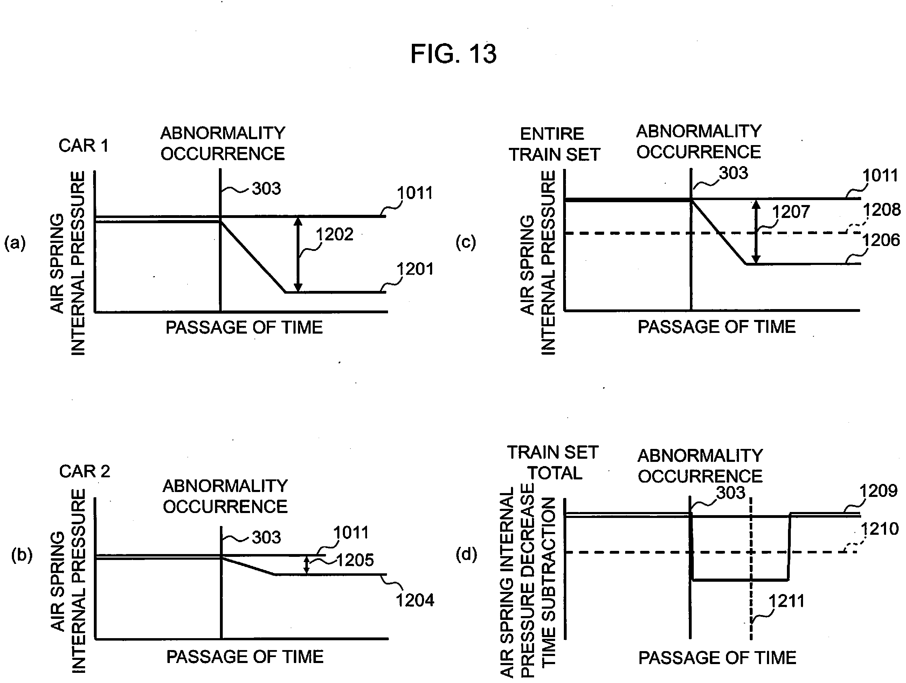

FIG. 13 is a characteristic diagram illustrating an air spring internal pressure and air spring internal pressure decrease time subtraction of each car and set car in the in-train abnormality detection system according to the fourth embodiment of the present invention. FIG. 13(a) illustrates the behavior of the air spring internal pressure of the car 101, where the horizontal axis represents the elapsed time and the vertical axis represents the air spring internal pressure measured by the air spring internal pressure value measurement device 108. In FIG. 13(a), the air spring internal pressure (difference) of the car 101 (car 1) is represented as an air spring internal pressure value 1201 and normally progresses at an approximately constant value over time. Suppose an abnormality occurs in the car 101 at time 303 while the door is opened, passengers in the car 101 escape altogether outside the car through the door, and some passengers in the car 102 (car 2) escape outside the car through the door. Then, the air spring internal pressure value 1201 of the car 101 gradually decreases. The air spring internal pressure value 1201 of the car 101 gradually increases the decrease 1202 from the air spring internal pressure base value 1011 and then returns to an approximately constant value.

FIG. 13(b) illustrates the behavior of the air spring internal pressure of car 102, where the horizontal axis represents the elapsed time and the vertical axis represents the air spring internal pressure measured by the air spring internal pressure value measurement device 109. In FIG. 13(b), the air spring internal pressure (difference) of car 102 (car 2) is represented as an air spring internal pressure value 1204 and normally progresses at an approximately constant value over time. Suppose an abnormality occurs in the car 101 at time 303 while the door is opened, passengers in the car 101 escape altogether outside the car through the door, and some passengers in the car 102 (car 2) escape outside the car through the door. Then, the air spring internal pressure value 1204 of the car 102 gradually decreases. However, a decrease 1205 in the air spring internal pressure value 1204 of the car 102 gradually increases to be smaller than the decrease 1202 from the air spring internal pressure base value 1011 and subsequently goes to an approximately constant value.

FIG. 13(c) illustrates the behavior of the total air spring internal pressure for the entire set car (train set total), including the cars 101 and 102, where the horizontal axis represents the elapsed time and the vertical axis represents the air spring internal pressure for the entire train set measured by the air spring internal pressure value measurement devices 108 and 109. In FIG. 13(c), the air spring internal pressure for the entire set car is represented as a total air spring internal pressure value 1206 for the entire train set and normally progresses at an approximately constant value over time. Suppose an abnormality occurs in the car 101 at time 303 while the door is opened, passengers in the car 101 escape altogether outside the car through the door, and some passengers in the car 102 (car 2) escape outside the car through the door. Then, the total air spring internal pressure value 1206 for the entire train set gradually decreases. The decrease 1207 from the air spring internal pressure base value 1011 goes below a threshold 1208 indicating the total air spring internal pressure threshold for the entire train set, and subsequently goes to an approximately constant value.

FIG. 13(d) illustrates the behavior of an air spring internal pressure decrease time subtraction for the entire set car, where the horizontal axis represents the elapsed time and the vertical axis represents the air spring internal pressure decrease time subtraction measured by the air spring internal pressure value measurement devices 108 and 109. In FIG. 13(d), the air spring internal pressure value decrease time subtraction for the entire set car is represented as the total air spring internal pressure value 1206 for the entire train set and normally progresses at an approximately constant value over time. Suppose an abnormality occurs in the car 101 at time 303 while the door is opened, passengers in the car 101 escape altogether outside the car through the door, and some passengers in the car 102 (car 2) escape outside the car through the door. Then, the air spring internal pressure value decrease time subtraction 1209 for the entire set car decreases drastically and goes below a threshold 1210 indicating the air spring internal pressure value decrease time subtraction threshold for the entire set car. The air spring internal pressure value decrease time subtraction 1209 for the entire set car subsequently remains below the threshold 1210 and returns to the original value when the evacuation of the passengers in the car 101 is completed. The total air spring internal pressure value decrease time subtraction 1209 for the entire set car is determined to be abnormal when the air spring internal pressure value decrease time subtraction 1209 for the entire set car remains below the threshold 1210 for a predetermined period or longer from time 303 and exceeds a duration threshold 1211 indicating the air spring internal pressure value decrease time subtraction elapsed time threshold for the entire set cat, namely, when the air spring internal pressure value decrease time subtraction 1209 continuously remains below the threshold 1210 longer than or equal to the duration threshold 1211.

An abnormality occurrence in the car 101 is detected and the crew is notified of the information that the abnormality occurs in the car 101 when the abnormality occurs in the car 101 at time 303 while the door is opened, passengers in the car 101 altogether escape outside the car through the door, some passengers in the car 102 (car 2) escape outside the car through the door, the air spring internal pressure value 1201 in the car 101 decreases, the air spring internal pressure value 1204 in the car 102 decreases, and all the following conditions (1) and (2) are satisfied.

(1) The total air spring internal pressure value 1206 for the entire train set goes below the total air spring internal pressure threshold 1208.

(2) The air spring internal pressure value decrease time subtraction 1209 for the entire formation continuously remains below the threshold 1210 longer than or equal to the duration threshold 1211.

When an abnormality occurs in a car while the door is opened, the present embodiment can detect an evacuation activity of passengers who escape altogether outside the car from the car 101 where the abnormality occurs. The crew can be notified of the car 101 as the car where the abnormality occurs based on the largest decrease in the air spring internal pressure value 1201 or 1204, making it possible to respond to the abnormality. The thresholds can be set in the same way as in the first embodiment.

According to the first through fourth embodiments, the air spring internal pressure value measurement devices 108 and 109 are used as a plurality of measurement means to measure the movement of passengers in each car. In the plurality of measurement means, each measurement value is compared with each abnormality determination value. The car information control device 104 is used as abnormality detection means to detect an abnormality occurrence in the train when the measurement value of at least one of the measurement means exceeds the range of the abnormality determination values. The abnormality notification device 103 is used as abnormality notification means to give notice of an abnormality occurrence in the train when the abnormality detection means detects the abnormality occurrence in the train. The movement of passengers can also be measured as a fluctuation in the number of passengers.

The plurality of measurement means include a plurality of passenger quantity measurement devices that measure the fluctuation in the number of passengers in each car as the passenger movement. The abnormality detection means detects an abnormality occurrence in the train when the measurement value of at least one of the passenger number measurement devices goes outside the range of abnormality determination values indicating the acceptable range of fluctuations in the number of passengers. For example, the number of passengers is calculated by dividing the load (acting on the car when passengers are aboard) acquired from the air spring internal pressure value 301 (load acting on the air spring) by the average weight of the passengers. When a decrease (corresponding to the decrease 304) in the number of calculated passengers goes outside the threshold for the number of passengers corresponding to the threshold 306, the decrease in the number of passengers is assumed to go outside the range of abnormality determination values indicating the acceptable range of fluctuations in the number of passengers, detecting the abnormality occurrence in the train. It is possible to detect an abnormality occurrence in the train when a fluctuation in the number of passengers in any of the cars goes outside the range of the abnormality determination values indicating the acceptable range of fluctuations in the number of passengers.

The plurality of passenger quantity measurement devices may include a plurality of air spring internal pressure value measurement devices 108 and 109 that measure air spring internal pressure values acting on the air spring in each car; and the car information control device 104 as a passenger quantity calculation device that calculates the number of passengers (the value acquired by dividing the load acting on the car by the average weight of the passengers) in each car based on each measured value (load) for the plurality of air spring internal pressure value measurement devices 108 and 109 and the average weight of the passengers.

The plurality of passenger quantity measurement devices can measure the first absolute value (absolute value for an increase and a decrease in the fluctuation in the number of passengers during a predetermined period) indicating a fluctuation in the number of passengers in each car during a predetermined period, and the second absolute value (absolute value for an increase and a decrease in the time subtraction for the fluctuation in the number of passengers during a predetermined period) indicating the time subtraction for the fluctuation in the number of passengers in each car during a predetermined period. The abnormality detection means can detect an abnormality occurrence in the train when the first absolute value of measurement values for at least one of the passenger quantity measurement devices exceeds the first threshold value belonging to the range of abnormality determination values and the second absolute value of measurement values for the one passenger quantity measurement device exceeds the second threshold belonging to the range of abnormality determination values.

The plurality of passenger quantity measurement devices can include a plurality of tire internal pressure value measurement devices to measure tire internal pressures acting on tires of each car and a passenger quantity calculation device to calculate the number of passengers in each car based on the measured values of a plurality of tire internal pressure value measurement devices and the average weight of passengers.

The passenger quantity measurement devices can include a plurality of spring compression force measurement devices to measure the compression force of springs installed in the vehicle suspension system in each car and a passenger quantity calculation device to calculate the number of passengers in each car based on measured values of a plurality of spring compression force measurement devices and a proportionality constant to specify the number of passengers.

The plurality of passenger quantity measurement devices can include a plurality of concentration measurement devices to measure the oxygen or carbon dioxide concentration in each car and a passenger quantity calculation device to calculate the number of passengers in each car based on the measured values of a plurality of concentration measurement devices and a proportionality constant to specify the number of passengers.

The plurality of passenger quantity measurement devices can include a plurality of pressure measurement devices to measure pressures acting on pressure-sensing mats (mats including piezoelectric elements) placed on the aisles in each car and a passenger quantity calculation device to calculate the number of passengers in each car based on the fluctuations in the measured values of each of the plurality of pressure measurement devices.

The plurality of passenger quantity measurement devices can include a passenger quantity calculation device that irradiates light (infrared rays) onto measurement targets (passengers) passing through side doors in each car or inter-car doors and calculates the number of passengers in each car based on the fluctuation in the amount of light reflecting off the measurement targets.

The present invention is not limited to the above-described embodiments but includes various modifications and comparable configurations within the spirit and scope of the appended claims. For example, the above-described embodiments have been described in detail in order to facilitate the understanding of the present invention, and the present invention is not necessarily limited to those including all of the described configurations.

The above-described configurations or functions, for example, may be embodied as hardware by designing all or part thereof as integrated circuits, for example, or as software so that a processor can interpret and execute a program to embody each function.

Information such as programs, tables, or files to embody each function can be stored in a storage device such as memory, a hard disk, and an SSD (Solid State Drive) or in a recording media such as an IC (Integrated Circuit) card, an SD (Secure Digital) card, and a DVD (Digital Versatile Disc).

List of Reference Signs

101, 102: car, 103: abnormality notification device, 104: car information control device, 105: abnormality detection logic, 106, 107: air spring, 108, 109: air spring internal pressure value measurement device, 405: abnormality detection logic, 705: abnormality detection logic, 710: air spring internal pressure base value recording portion, 1005: abnormality detection logic, 1010: air spring internal pressure base value recording portion

**Claims**

1.   An in-train abnormality detection system comprising:
a plurality of measurement means to measure passenger movement in each car of a train including a plurality of connected cars; and
abnormality detection means to compare each measurement value of the plurality of measurement means with an abnormality determination value and detect an abnormality occurrence in the train when a measurement value of at least one of the measurement means exceeds a range of the abnormality determination values.

2.   The in-train abnormality detection system according to claim 1,

wherein the plurality of measurement means include a plurality of passenger quantity measurement devices to measure the number of passengers in each of the cars as passenger movement in each of the cars, and
wherein the abnormality detection means detects an abnormality occurrence in the train when a measurement value of at least one of the passenger quantity measurement devices goes outside an acceptable range of fluctuations in the number of passengers.

**3.** The in-train abnormality detection system according to claim 2,
wherein each of the passenger quantity measurement devices includes an air spring internal pressure value measurement device to measure an air spring internal pressure value acting on an air spring in each of the cars; and a passenger quantity calculation device to calculate the number of passengers in each of the cars based on a measured value of the air spring internal pressure value measurement device and an average weight of passengers in each of the cars.

**4.** The in-train abnormality detection system according to claim 2, further comprising:
abnormality notification means to notify a train inside of an abnormality occurrence in the train when the abnormality detection means detects an abnormality occurrence in the train.

**5.** The in-train abnormality detection system according to claim 1,

wherein each of the measurement means includes an air spring internal pressure value measurement device that measures an air spring internal pressure value acting on an air spring in each of the cars,
wherein the abnormality detection means includes a car information control device that acquires each air spring internal pressure value measured by each of the air spring internal pressure value measurement devices from each of the air spring internal pressure value measurement devices in each of the cars and calculates an air spring internal pressure value difference indicating a time change in each of the air spring internal pressure values and an air spring internal pressure value time subtraction indicating a change in each of the air spring internal pressure values per measurement cycle based on each of the acquired air spring internal pressure values, and
wherein the car information control device detects an abnormality in any one of the cars upon the satisfaction of four conditions including a first condition in which a decrease indicating the air spring internal pressure value difference in the any one of the plurality of cars goes below a first air spring internal pressure threshold value; a second condition in which an increment indicating the air spring internal pressure value difference in an adjacent car adjacent to the one car exceeds a second air spring internal pressure threshold; a third condition in which the air spring internal pressure value time subtraction in the one car continuously remains below a first air spring internal pressure value time subtraction threshold longer than or equal to a first duration threshold; and a fourth condition in which the air spring internal pressure value time subtraction in the adjacent car continuously exceeds a second air spring internal pressure value time subtraction threshold longer than or equal to a second duration threshold.

**6.** The in-train abnormality detection system according to claim 5,
wherein, when the four conditions are not satisfied, the car information control device totals the air spring internal pressure values acquired from the air spring internal pressure value measurement devices of all the cars belonging to the train, calculates an air spring internal pressure total value difference indicating a time change in the total of the air spring internal pressure values and a total air spring internal pressure value time subtraction indicating a change in the total of the air spring internal pressure values per measurement cycle based on the total of the air spring internal pressure values, and detects an abnormality in the one car upon the satisfaction of two conditions including: a fifth condition in which the air spring internal pressure total value difference goes below a total air spring internal pressure threshold for a decrease and a sixth condition in which the total air spring internal pressure value time subtraction continuously remains below a total air spring internal pressure value time subtraction threshold longer than or equal to a third duration threshold.

**7.** The in-train abnormality detection system according to claim 1,

wherein each of the measurement means includes an air spring internal pressure value measurement device to measure an air spring internal pressure value acting on an air spring in each of the cars,
wherein the abnormality detection means includes an air spring internal pressure base value recording device that records an air spring internal pressure base value that is the reference for the air spring internal pressure value; and a car information control device that acquires each air spring internal pressure value measured by each of the air spring internal pressure value measurement devices from each of the air spring internal pressure value measurement devices in each of the cars, acquires the air spring internal pressure base value from the air spring internal pressure base value recording device, and calculates an air spring internal pressure value difference indicating a time change in each of the air spring internal pressure values and an air spring internal pressure value time subtraction indicating a change in each of the air spring internal pressure values per measurement cycle based on a difference between each of the acquired air spring internal pressure values and the air spring internal pressure base value, and

wherein the car information control device detects an abnormality in the one car upon the satisfaction of four conditions including: a first condition in which a decrease indicating a difference between the air spring internal pressure value and the air spring internal pressure base value in any one of the cars goes below a first air spring internal pressure threshold; a second condition in which an increase indicating a difference between the air spring internal pressure value and the air spring internal pressure base value in an adjacent car adjacent to the one car exceeds a second air spring internal pressure threshold; a third condition in which an air spring internal pressure value decrease time subtraction of the air spring internal pressure value time subtraction in the one car continuously remains below an air spring internal pressure value decrease time subtraction threshold longer than or equal to a first duration threshold; and a fourth condition in which an air spring internal pressure value increase time subtraction of the air spring internal pressure value time subtraction in the adjacent car continuously exceeds an air spring internal pressure value increase time subtraction threshold longer than or equal to a second duration threshold.

8. The in-train abnormality detection system according to claim 7,
   wherein, when the four conditions are not satisfied, the car information control device totals the air spring internal pressure value acquired from the air spring internal pressure value measurement devices for all cars belonging to the train and the air spring internal pressure base value acquired from the air spring internal pressure base value recording device, calculates an air spring internal pressure total value difference indicating a time change in the total of the air spring internal pressure values and a total air spring internal pressure value time subtraction indicating a change in the total of the air spring internal pressure values per measurement cycle based on the total of the air spring internal pressure values, and detects an abnormality in the one car upon the satisfaction of two conditions including: a fifth condition in which the air spring internal pressure total value difference goes below a total air spring internal pressure threshold for a decrease; and a sixth condition in which an air spring internal pressure total value decrease time subtraction of the total air spring internal pressure value time subtraction continuously remains below an air spring internal pressure total value decrease time subtraction threshold longer than or equal to a third duration threshold.

9. The in-train abnormality detection system according to claim 1,

   wherein each of the measurement means includes an air spring internal pressure value measurement device that measures an air spring internal pressure value acting on an air spring in each of the cars,
   wherein the abnormality detection means includes a car information control device that acquires each air spring internal pressure value measured by each of the air spring internal pressure value measurement devices from each of the air spring internal pressure value measurement devices in each of the cars and calculates an air spring internal pressure value difference indicating a time change in each of the air spring internal pressure values based on each of the acquired air spring internal pressure values, and
   wherein the car information control device detects an abnormality in the one car upon the satisfaction of two conditions including: a first condition in which a decrease indicating the air spring internal pressure value difference in any one of the cars goes below a first air spring internal pressure threshold; and a second condition in which an increase indicating the air spring internal pressure value difference in an adjacent car adjacent to the one car exceeds a second air spring internal pressure threshold.

10. A method for an in-train abnormality detection system including a plurality of measurement means and abnormality detection means, comprising:

    a measurement step in which each of the measurement means measures the movement of passengers in each car of a train including a plurality of connected cars; and
    an abnormality detection step in which the abnormality detection means compares each of measurement values of the plurality of the measurement means with an abnormality determination value and detects an abnormality occurrence in the train when a measurement value of at least one of the plurality of the measurement means exceeds a range of the abnormality determination values.

11. The in-train abnormality detection method according to claim 10,

    wherein, in the measurement step, each of the measurement means measures an air spring internal pressure value acting on an air spring in each of the cars, and
    wherein, in the abnormality detection step, the abnormality detection means calculates an air spring internal pressure value difference indicating a time change in each of the air spring internal pressure values and an air spring internal pressure value time subtraction indicating a change in each of the air spring internal pressure

EP 4 538 145 A1

values per measurement cycle based on each air spring internal pressure value measured by each of the measurement means in the measurement step and, based on the calculated result, detects an abnormality in the one car upon the satisfaction of four conditions including: a first condition in which a decrease indicating the air spring internal pressure value difference in any one of the cars goes below a first air spring internal pressure threshold; a second condition in which an increase in the air spring internal pressure value difference in an adjacent car adjacent to the one car exceeds a second air spring internal pressure threshold; a third condition in which the air spring internal pressure value time subtraction in the one car continuously remains below a first air spring internal pressure value time subtraction threshold longer than or equal to a first duration threshold; and a fourth condition in which the air spring internal pressure value time subtraction in the adjacent car continuously exceeds a second air spring internal pressure value time subtraction threshold longer than or equal to a second duration threshold.

12. The in-train abnormality detection method according to claim 11,
wherein, when the four conditions are not satisfied in the abnormality detection step, the abnormality detection means totals the air spring internal pressure values for all cars belonging to the train, calculates an air spring internal pressure total value difference indicating a time change in the total of the air spring internal pressure values and a total air spring internal pressure time subtraction indicating a change in the total of the air spring internal pressure values per measurement cycle based on the total of the air spring internal pressure values, and detects an abnormality in the one car upon the satisfaction of two conditions including: a fifth condition in which the air spring internal pressure total value difference goes below a total air spring internal pressure threshold for a decrease; and a sixth condition in which the total air spring internal pressure time subtraction continuously remains below a total air spring internal pressure time subtraction threshold longer than or equal to a third duration threshold.

13. The in-train abnormality detection method according to claim 10, further comprising:

a recording step in which the abnormality detection means records an air spring internal pressure base value, as a reference for the air spring internal pressure value, in an air spring internal pressure base value recording device, wherein, in the measurement step, each of the plurality of measurement means measures an air spring internal pressure value acting on an air spring in each of the cars, and
wherein, in the abnormality detection step, the abnormality detection means acquires each air spring internal pressure value measured by each of measurement means in the measurement step and the air spring internal pressure base value recorded in the recording step, calculates an air spring internal pressure value difference indicating a time change in each of the air spring internal pressure values and an air spring internal pressure value time subtraction indicating a change in each of the air spring internal pressure values per measurement cycle based on the difference between each acquired air spring internal pressure value and the air spring internal pressure base value, and based on the calculated result, detects an abnormality in the one car upon the satisfaction of four conditions including:

a first condition in which a decrease indicating a difference between the air spring internal pressure value and the air spring internal pressure base value in any one of the cars goes below a first air spring internal pressure threshold; a second condition in which an increase indicating a difference between the air spring internal pressure value and the air spring internal pressure base value in an adjacent car adjacent to the one car exceeds a second air spring internal pressure threshold;
a third condition in which an air spring internal pressure value decrease time subtraction of the air spring internal pressure value time subtraction in the one car continuously remains below an air spring internal pressure value decrease time subtraction threshold longer than or equal to a first duration threshold;
and a fourth condition in which an air spring internal pressure value increase time subtraction of the air spring internal pressure value time subtraction in the adjacent car continuously exceeds an air spring internal pressure value increase time subtraction threshold longer than or equal to a second duration threshold.

14. The in-train abnormality detection method according to claim 13,
wherein, when the four conditions are not satisfied in the abnormality detection step, the abnormality detection means totals the air spring internal pressure values for all cars belonging to the train and the air spring internal pressure base value acquired from the air spring internal pressure base value recording device, calculates an air spring internal pressure total value difference indicating a time change in the total of the air spring internal pressure values and a total air spring internal pressure value time subtraction indicating a change in the total of the air spring internal pressure values per measurement cycle based on the total of the air spring internal pressure values, and based on the calculated result, detects an abnormality in the one car upon the satisfaction of two conditions including: a fifth condition in which the air spring internal pressure total value difference goes below a total air spring internal pressure threshold for a decrease; and a sixth condition in which an air spring internal pressure value decrease time subtraction of the total air spring internal pressure value time subtraction continuously remains below an air spring internal pressure value decrease time subtraction threshold longer than or equal to a third duration threshold.

15. The in-train abnormality detection method according to claim 10,

wherein, in the measurement step, each of the measurement means measures an air spring internal pressure value acting on an air spring in each of the cars, and

wherein, in the abnormality detection step, the abnormality detection means calculates an air spring internal pressure value difference indicating a time change in each of the air spring internal pressure values and an air spring internal pressure value time subtraction indicating a change in each of the air spring internal pressure values per measurement cycle, based on each air spring internal pressure value measured by each of the measurement means in the measurement step, and based on the calculated result, detects an abnormality in the one car upon the satisfaction of two conditions including: a first condition in which a decrease indicating the air spring internal pressure value difference in any one of the cars goes below a first air spring internal pressure threshold; and a second condition in which an increase indicating the air spring internal pressure value difference in an adjacent car adjacent to the one car exceeds a second air spring internal pressure threshold.

# FIG. 1

CAR 1

CAR INFORMATION CONTROL DEVICE 104

ABNORMALITY DETECTION 105

ABNORMALITY NOTIFICATION DEVICE 103

AIR SPRING 106

AIR SPRING INTERNAL PRESSURE VALUE MEASUREMENT DEVICE 108

110 ABNORMALITY DETECTION RESULT

111 AIR SPRING INTERNAL PRESSURE VALUE

112 AIR SPRING INTERNAL PRESSURE VALUE

CAR 2 102

AIR SPRING 107

AIR SPRING INTERNAL PRESSURE VALUE MEASUREMENT DEVICE 109

101

EP 4 538 145 A1

FIG. 2

```
                    ┌─────────────┐
                    │    START    │
                    └──────┬──────┘
                           │
                           │                              S201
            ┌──────────────▼──────────────────┐◄────────┐
            │ ACQUIRE CURRENT AIR SPRING       │         │
            │ INTERNAL PRESSURE VALUES OF      │         │
            │ EACH CAR                         │         │
            └──────────────┬──────────────────┘         │
                           │                      S202    │
            ┌──────────────▼──────────────────┐         │
            │ CALCULATE DIFFERENCE AND         │         │
            │ TIME SUBTRACTION IN AIR SPRING   │         │
            │ INTERNAL PRESSURE VALUES OF      │         │
            │ EACH CAR                         │         │
            └──────────────┬──────────────────┘         │
                           │                             │
                           ▼            S203              │
                   ╱───────────────╲                     │
                  ╱ DIFFERENCE AND   ╲                    │
                 ╱ TIME SUBTRACTION   ╲    NO             │
                ╱ IN AIR SPRING        ╲──────────────────┘
                ╲ INTERNAL PRESSURE    ╱
                 ╲ VALUES BETWEEN     ╱
                  ╲ CARS EXCEEDING   ╱
                   ╲ INCREASE OR    ╱
                    ╲ DECREASE     ╱
                     ╲ THRESHOLD? ╱
                      ╲─────┬────╱
                            │ YES
                            │              S204
            ┌───────────────▼──────────────────┐
            │ NOTIFY CREW OF ABNORMALITY        │
            │ OCCURRENCE IN CAR WHERE AIR       │
            │ SPRING INTERNAL PRESSURE VALUE    │
            │ DECREASES                         │
            └───────────────┬──────────────────┘
                            │
                    ┌───────▼──────┐
                    │     END      │
                    └──────────────┘
```

FIG. 3

# FIG. 4

## NORMAL DISTRIBUTION

# FIG. 5

CAR 1 · 101

CAR 2 · 102

CAR INFORMATION CONTROL DEVICE · 104

AIR SPRING · 106

AIR SPRING · 107

ABNORMALITY DETECTION · 405

ABNORMALITY NOTIFICATION DEVICE · 103

AIR SPRING INTERNAL PRESSURE VALUE MEASUREMENT DEVICE · 108

AIR SPRING INTERNAL PRESSURE VALUE MEASUREMENT DEVICE · 109

ABNORMALITY DETECTION RESULT · 110

AIR SPRING INTERNAL PRESSURE VALUE · 111

AIR SPRING INTERNAL PRESSURE VALUE · 112

EP 4 538 145 A1

## FIG. 6

```
START
  │
  ▼
┌─────────────────────────────────┐
│ ACQUIRE CURRENT AIR SPRING       │  S201
│ INTERNAL PRESSURE VALUES OF      │
│ EACH CAR                         │
└─────────────────────────────────┘
  │
  ▼
┌─────────────────────────────────┐
│ CALCULATE DIFFERENCE AND TIME    │  S202
│ SUBTRACTION IN AIR SPRING        │
│ INTERNAL PRESSURE VALUES OF      │
│ EACH CAR                         │
└─────────────────────────────────┘
  │
  ▼
   DIFFERENCE AND TIME               S203
   SUBTRACTION IN AIR SPRING
   INTERNAL PRESSURE VALUES    ──NO──►
   BETWEEN CARS EXCEEDING
   INCREASE OR DECREASE
   THRESHOLD?
  │YES
```

S601 — TOTAL AIR SPRING INTERNAL PRESSURE VALUES FOR ALL CARS IN TRAIN SET

S602 — CALCULATE DIFFERENCE AND TIME SUBTRACTION BETWEEN TOTAL AIR SPRING INTERNAL PRESSURE VALUE AND TOTAL AIR SPRING INTERNAL PRESSURE VALUE IN MOST RECENT PROCESSING LOOP

S603 — DIFFERENCE AND TIME SUBTRACTION BETWEEN TOTAL AIR SPRING INTERNAL PRESSURE VALUES EXCEEDING DECREASE THRESHOLD? — NO / YES

S204 — NOTIFY CREW OF ABNORMALITY OCCURRENCE IN CAR WHERE AIR SPRING INTERNAL PRESSURE VALUE DECREASES

```
  │
  ▼
 END
```

FIG. 7

# FIG. 8

CAR 1 ~101    CAR 2 ~102

CAR INFORMATION CONTROL DEVICE ~104

ABNORMALITY NOTIFICATION DEVICE ~103

ABNORMALITY DETECTION RESULT ~110

ABNORMALITY DETECTION ~705

AIR SPRING INTERNAL PRESSURE VALUE ~111

AIR SPRING INTERNAL PRESSURE VALUE MEASUREMENT DEVICE ~108

AIR SPRING ~106

AIR SPRING ~107

AIR SPRING INTERNAL PRESSURE VALUE MEASUREMENT DEVICE ~109

AIR SPRING INTERNAL PRESSURE VALUE ~112

AIR SPRING INTERNAL PRESSURE BASE VALUE ~711

AIR SPRING INTERNAL PRESSURE BASE VALUE RECORDING PORTION ~710

EP 4 538 145 A1

FIG. 9

```
                                                    ┌──────────┐
                                                    │  START   │
                                                    └────┬─────┘
                                                         │
        ┌────────────────────────────────────┐          │          ┌─────────────────────────────────┐
        │  ACQUIRE AIR SPRING INTERNAL       │ S901     ▼          │ ACQUIRE CURRENT AIR SPRING      │ S201
        │  PRESSURE BASE VALUE               │          │          │ INTERNAL PRESSURE VALUES        │
        └────────────────────┬───────────────┘          │          │ OF EACH CAR                     │
                             └──────────────────────────┼──────────┴─────────────────────────────────┘
                                                         ▼
                                             ┌───────────────────────────────┐ S902
                                             │ CALCULATE DIFFERENCE AND TIME │
                                             │ SUBTRACTION BETWEEN AIR SPRING│
                                             │ INTERNAL PRESSURE VALUE FOR   │
                                             │ EACH CAR AND BASE VALUE       │
                                             └───────────────┬───────────────┘
                                                             ▼
                                                        DIFFERENCE AND TIME        S203
                                                   SUBTRACTION IN AIR SPRING INTERNAL
                                                   PRESSURE VALUES BETWEEN CARS   NO
                                                   EXCEEDING INCREASE OR
                                                   DECREASE THRESHOLD?
                                                             │ YES
                                             ┌───────────────────────────────┐ S204
                                             │ NOTIFY CREW OF ABNORMALITY    │
                                             │ OCCURRENCE IN CAR WHERE AIR   │
                                             │ SPRING INTERNAL PRESSURE      │
                                             │ VALUE DECREASES               │
                                             └───────────────┬───────────────┘
                                                             ▼
                                                        ┌─────────┐
                                                        │   END   │
                                                        └─────────┘
```

EP 4 538 145 A1

FIG. 10

## FIG. 11

CAR 1 — 101

CAR 2 — 102

**CAR INFORMATION CONTROL DEVICE** — 104

**AIR SPRING** — 106

**AIR SPRING** — 107

**ABNORMALITY NOTIFICATION DEVICE** — 103

1005

**ABNORMALITY DETECTION**

110 — ABNORMALITY DETECTION RESULT

111 — AIR SPRING INTERNAL PRESSURE VALUE

**AIR SPRING INTERNAL PRESSURE VALUE MEASUREMENT DEVICE** — 108

**AIR SPRING INTERNAL PRESSURE VALUE MEASUREMENT DEVICE** — 109

112 — AIR SPRING INTERNAL PRESSURE VALUE

1011 — AIR SPRING INTERNAL PRESSURE BASE VALUE

1010 — **AIR SPRING INTERNAL PRESSURE BASE VALUE RECORDING PORTION**

EP 4 538 145 A1

**FIG. 12**

START

S1201
ACQUIRE AIR SPRING INTERNAL
PRESSURE BASE VALUE

S201
ACQUIRE CURRENT AIR SPRING
INTERNAL PRESSURE VALUES OF
EACH CAR

S1202
CALCULATE DIFFERENCE AND TIME
SUBTRACTION BETWEEN AIR SPRING
INTERNAL PRESSURE VALUE FOR
EACH CAR AND BASE VALUE

S1203
TOTAL AIR SPRING INTERNAL
PRESSURE VALUES AND AIR SPRING
INTERNAL PRESSURE BASE
VALUES FOR ALL CARS IN TRAIN SET

S1204
CALCULATE DIFFERENCE AND
TIME SUBTRACTION IN AIR SPRING
INTERNAL PRESSURE VALUES
FOR ALL CARS IN TRAIN SET

S203
DIFFERENCE AND TIME
SUBTRACTION IN AIR SPRING
INTERNAL PRESSURE VALUES
BETWEEN CARS EXCEEDING
INCREASE OR DECREASE
THRESHOLD?    NO

S1205
DIFFERENCE AND
TIME SUBTRACTION IN AIR
SPRING INTERNAL PRESSURE
VALUE FOR ALL CARS IN TRAIN
SET EXCEEDING
THRESHOLD?    NO

YES

YES

S204
NOTIFY CREW OF ABNORMALITY
OCCURRENCE IN CAR WHERE
AIR SPRING INTERNAL PRESSURE
VALUE DECREASES

END

EP 4 538 145 A1

# FIG. 13

(a) CAR 1 — ABNORMALITY OCCURRENCE — 303 — 1011 — 1202 — 1201
AIR SPRING INTERNAL PRESSURE / PASSAGE OF TIME

(b) CAR 2 — ABNORMALITY OCCURRENCE — 303 — 1011 — 1205 — 1204
AIR SPRING INTERNAL PRESSURE / PASSAGE OF TIME

(c) ENTIRE TRAIN SET — ABNORMALITY OCCURRENCE — 303 — 1011 — 1208 — 1207 — 1206
AIR SPRING INTERNAL PRESSURE / PASSAGE OF TIME

(d) TRAIN SET TOTAL — ABNORMALITY OCCURRENCE — 303 — 1209 — 1210 — 1211
AIR SPRING INTERNAL PRESSURE DECREASE TIME SUBTRACTION / PASSAGE OF TIME

EP 4 538 145 A1

## INTERNATIONAL SEARCH REPORT

| International application No. |
| --- |
| **PCT/JP2023/020747** |

**A. CLASSIFICATION OF SUBJECT MATTER**

***B61L 25/02***(2006.01)i; ***B60L 3/00***(2019.01)i; ***B61D 37/00***(2006.01)i; ***B61K 13/04***(2006.01)i; ***G01M 17/08***(2006.01)i
FI: B61L25/02 Z; B60L3/00 A; B60L3/00 N; B61D37/00 G; B61K13/04; G01M17/08

According to International Patent Classification (IPC) or to both national classification and IPC

**B. FIELDS SEARCHED**

Minimum documentation searched (classification system followed by classification symbols)
B61L25/02; B60L3/00; B61D37/00; B61K13/04; G01M17/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2019-111886 A (CANON MARKETING JAPAN INC.) 11 July 2019 (2019-07-11) paragraph [0040], fig. 5 | 1-4, 10 |
| A | | 5-9, 11-15 |
| Y | JP 2009-110054 A (PANASONIC CORP.) 21 May 2009 (2009-05-21) paragraphs [0036]-[0072], [0099]-[0111], fig. 1-26, 38-40 | 1-4, 10 |
| Y | JP 2019-006272 A (DENSO TEN LTD.) 17 January 2019 (2019-01-17) paragraph [0003] | 3 |
| A | CN 109919066 A (HUNAN XINDATONG INFORMATION TECHNOLOGY CO., LTD.) 21 June 2019 (2019-06-21) entire text, all drawings | 1-15 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| **07 August 2023** | **15 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/020747**

| Patent document cited in search report | | | Publication date (day/month/year) | Patent family member(s) | Publication date (day/month/year) |
|---|---|---|---|---|---|
| JP | 2019-111886 | A | 11 July 2019 | (Family: none) | |
| JP | 2009-110054 | A | 21 May 2009 | US 2010/0177963 A1 paragraphs [0207]-[0241], [0273]-[0287], fig. 1-26, 38-40 US 2013/0195364 A1 WO 2009/054119 A1 CN 101681555 A CN 102582664 A | |
| JP | 2019-006272 | A | 17 January 2019 | (Family: none) | |
| CN | 109919066 | A | 21 June 2019 | (Family: none) | |

Form PCT/ISA/210 (patent family annex) (January 2015)

34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013241134 A
- JP 2006218933 A
- JP 2021141389 A